# EUROPÄISCHE PATENTANMELDUNG

(11) **EP 4 269 334 A1**
(43) Veröffentlichungstag der Anmeldung: **01.11.2023**
(21) Anmeldenummer: 23167883.0
(22) Anmeldetag: 14.04.2023
(51) Int. Cl.: C01B 13/02, A62B 21/00

(54) **ZUSAMMENSETZUNG ZUR ERZEUGUNG VON SAUERSTOFF**

(30) Priorität: 27.04.2022 DE 102022110173
(71) Anmelder: Diehl Aviation Gilching GmbH, 82205 Gilching (DE)
(72) Erfinder: Kallfaß, Christoph, 74523 Schwäbisch Hall (DE); Fritze, Lars, 97074 Würzburg (DE); Finze, Maik, 97295 Waldbrunn (DE)
(74) Vertreter: Diehl Patentabteilung

(57) **Zusammenfassung**

Die Erfindung betrifft eine Zusammensetzung zur Erzeugung von Sauerstoff, umfassend die folgenden Bestandteile oder bestehend aus den folgenden Bestandteilen:
- Eine Sauerstoffquelle, wobei die Sauerstoffquelle Kaliumsuperoxid ist,
und
- eine Wasser enthaltende Lösung oder eine Wasser enthaltende Mischung, wobei die Wasser enthaltende Lösung eine solche Menge eines Salzes oder eine solche Menge eines Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist.

## Beschreibung

Die vorliegende Erfindung betrifft eine Zusammensetzung zur Erzeugung von, insbesondere atembarem, Sauerstoff, einen Sauerstoffgenerator, ein Verfahren zur Erzeugung von, insbesondere atembarem, Sauerstoff und eine Verwendung der Zusammensetzung. Die Zusammensetzung umfasst eine Sauerstoffquelle.

Der Mensch kann ohne Sauerstoff nicht existieren. In vielen Umgebungen ist die Sauerstoffversorgung jedoch unzureichend oder es besteht die Gefahr von Notfallsituationen mit Sauerstoffmangel. Um atembaren Sauerstoff zu erzeugen, können verschiedene Arten chemischer Sauerstoffgeneratoren eingesetzt werden. Ein Typ eines solchen chemischen Sauerstoffgenerators verwendet Peroxide als Sauerstoffquelle, zum Beispiel Natriumpercarbonat, Natriumperborat oder ein Harnstoffaddukt von Wasserstoffperoxid. Die Zersetzung der Peroxide ergibt Sauerstoff, und die Zersetzungsreaktion kann durch Inkontaktbringen der Peroxidverbindungen mit einem geeigneten Enzym oder Übergangsmetallkatalysator gestartet werden. Chemische Sauerstoffgeneratoren dieser Art sind in US 2 035 896 A, WO 86/02063 A1, JP S61227903 A und DE 196 02 149 A1 offenbart.

Aus der EP 3 323 782 A1 sind ionische Flüssigkeiten bekannt, die als Lösungsmittel in einer sauerstofferzeugenden Zusammensetzung verwendet werden. Die Zusammensetzung umfasst mindestens eine Sauerstoffquelle, mindestens eine ionische Flüssigkeit und mindestens eine Metalloxidverbindung, wobei die Sauerstoffquelle eine Peroxidverbindung umfasst und die ionische Flüssigkeit zumindest in einem Temperaturbereich von -10°C bis +50°C im flüssigen Zustand vorliegt. Die Metalloxidverbindung ist ein Oxid eines einzelnen Metalls oder von zwei oder mehr verschiedenen Metallen, wobei das/die Metall(e) aus den Metallen der Gruppen 2 bis 14 des Periodensystems der Elemente ausgewählt ist/sind.

Die WO 2006/001607 A1 offenbart sauerstofferzeugende Zusammensetzungen, die Kaliumsuperoxid oder Natriumperoxid, ein Material zur Stabilisierung der Reaktivität und des Oxidationsvermögens von Kaliumsuperoxid oder Natriumperoxid und gegebenenfalls mindestens einen Katalysator, ausgewählt aus einem Oxidationskatalysator für Kohlenmonoxid, einem Material zur Verbesserung der Formbarkeit und Verarbeitbarkeit der Zusammensetzung und einem Material zur Erhöhung der anfänglichen Kohlendioxidabsorptionsrate umfassen. Das Material zur Stabilisierung der Reaktivität und der Oxidationskraft von Kaliumsuperoxid oder Natriumperoxid wird ausgewählt aus Calciumhydroxid, Aluminiumhydroxid, Magnesiumhydroxid, Bariumhydroxid, Calciumcarbonat, Talkum und Ton. Der Katalysator für die Oxidation von Kohlenmonoxid ist ausgewählt aus Kupferoxid, Manganoxid und einer Mischung davon (Hopcalit). Das Material zur Verbesserung der Formbarkeit und Verarbeitbarkeit der sauerstofferzeugenden Zusammensetzungen wird ausgewählt aus Glaspulver, Glasfaser, Keramikfaser, Stahlwolle, Bentonit, Kaolinit, Natriumsilikat und Kaliumsilikat.

Die US 4 490 274 offenbart eine chemische Zusammensetzung, umfassend sauerstoffhaltige Bestandteile und Aktivatoren, die, wenn sie aktiviert werden, Sauerstoff zur Verwendung in Atemgemischen erzeugen, wobei die sauerstoffhaltigen Bestandteile Kaliumsuperoxid und Natriumperoxid sind und die Aktivatoren Aluminiumhydroxid, Mangandioxid und pulverisiertes Aluminium sind. Das Verhältnis der chemischen Zusammensetzung entspricht 10-20 Gew.-% Natriumperoxid, 15-25 Gew.-% Aluminiumhydroxid, 5-7 Gew.-% Manganoxid, 2,5-3,5 Gew.-% Aluminiumpulver. Der Rest des Verhältnisses der chemischen Zusammensetzung entspricht Kaliumsuperoxid.

Aus der US 2017/0263989 A1 ist eine elektrochemische Lithium-Luft-Zelle bekannt. Die Batterie umfasst einen Anodenraum, einen Kathodenraum und eine Lithiumionen-leitende Membran, die den Anodenraum vom Kathodenraum trennt. Die Anodenkammer umfasst eine Anode mit Lithium, eine Lithiumlegierung oder ein poröses Material, das Lithium adsorbieren und freisetzen kann, und einen Lithiumionenelektrolyten, während die Kathodenkammer eine Luftelektrode, eine ionische Flüssigkeit, die die Reduktion von Sauerstoff unterstützen kann, und eine gelöste Konzentration von Kaliumsuperoxid umfasst. Die Lithiumionenkonzentration im Kathodenraum ist im Vergleich zur Kaliumionenkonzentration gering.

Die US 2021/0147232 A1 offenbart eine Zusammensetzung zum Erzeugen von Sauerstoff, umfassend eine Sauerstoffquelle, eine ionische Flüssigkeit, ein Metallsalz und eine basische Verbindung, wobei die Sauerstoffquelle eine Peroxidverbindung umfasst, die ionische Flüssigkeit sich in einem Temperaturbereich von -10°C bis +50°C in einem flüssigen Zustand befindet und das Metallsalz ein einzelnes Metall oder zwei oder mehr verschiedene Metalle und ein organisches und/oder ein anorganisches Anion umfasst. Als mögliche Sauerstoffquellen sind Alkalimetallpercarbonate, Alkalimetallperborate, Harnstoffwasserstoffperoxid und Mischungen davon genannt.

US 4,963,327 offenbart eine Vorrichtung und ein Verfahren zum selektiven Absorbieren unerwünschter organischer und anorganischer Dämpfe und Gase aus der Umgebungsluft bei gleichzeitiger Erhöhung des Sauerstoffgehalts der behandelten Luft. Zur Absorption von Kohlendioxid dient dabei ein in fester Form vorliegender Kohlendioxidabsorber, bei dem es sich um Lithiumhydroxid handeln kann. Als Beispiele einer Sauerstoff erzeugenden Verbindung werden Alkalimetall- und Erdalkalimetallperoxide, Superoxide, Trioxide, Percarbonate, Permanganaten und Mischungen davon genannt. Bei langsamer Atmung reicht die Reaktion dieser Verbindungen mit der Feuchtigkeit aus der Atemluft zur Sauerstofffreisetzung. Bei schneller Atmung, wird der Sauerstoff erzeugenden Verbindung eine wässrige Lösung von MgCl₂ mit einer geringen Menge an Tensid aus einem angeschlossenen Reservoir zugeführt. Das MgCl₂ dient dabei als Frostschutzmittel und als Zersetzungsmittel für die alkalischen Salze aus der Sauerstoff erzeugenden Verbindung/Wasser/Kohlendioxid-Reaktion. Ein unlösliches Gel aus Magnesiumhydroxid/-carbonat wird zusammen mit pH-neutralem Salz gebildet. Anstelle von MgCl₂ können andere Salze verwendet werden, die in wässrigen Lösungen eine Gefrierpunkterniedrigungen bewirken, wenn sie bei Reaktion mit Alkalihydroxiden und/oder -carbonaten im Wesentlichen unlösliche Verbindungen bilden. Beispiele sind CaCl₂, FeCl₃ und ZnCl₂.

Die Aufgabe, die durch die vorliegende Erfindung zu lösen ist, besteht darin, eine alternative Zusammensetzung zur Erzeugung von Sauerstoff und einen alternativen Sauerstoffgenerator bereitzustellen. Weiterhin sollen ein Verfahren und eine Verwendung zur Erzeugung von Sauerstoff angegeben werden.

Die Aufgabe wird durch die Merkmale der Patentansprüche 1, 10, 13 und 15 gelöst. Ausgestaltungen der Erfindung ergeben sich aus den Merkmalen der Patentansprüche 2 bis 9, 11, 12 und 14.

Die Erfindung betrifft eine Zusammensetzung zur Erzeugung von Sauerstoff, wobei die Zusammensetzung die folgenden Bestandteile umfasst oder daraus besteht: Eine Sauerstoffquelle, wobei die Sauerstoffquelle Kaliumsuperoxid ist, und eine Wasser enthaltende Lösung oder eine Wasser enthaltende Mischung, wobei die Wasser enthaltende Lösung eine solche Menge eines Salzes oder eine solche Menge eines Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist. Das Salz der Wasser enthaltenden Lösung ist dabei ein Alkalimetallhydroxid, ein Alkalimetallhydroxid-Hydrat, ein Alkalimetallchlorid, ein Alkalimetallchlorid-Hydrat, ein Hydroxid mit einem organischen Kation, ein Hydrat eines Hydroxids mit einem organischen Kation oder ein Gemisch von mindestens zwei ausgewählt aus einem Alkalimetallhydroxid, einem Alkalimetallhydroxid-Hydrat, einem Alkalimetallchlorid, einem Alkalimetallchlorid-Hydrat, einem Hydroxid mit einem organischen Kation und einem Hydrat eines Hydroxids mit einem organischen Kation. Das Gefrierschutzmittel umfasst einen Alkohol oder besteht aus einem Alkohol. Es kann sich bei dem Salz um ein als Feststoff vorliegendes Salz handeln.

Die Wasser enthaltende Lösung kann im einfachsten Fall nur aus Wasser und dem Salz oder aus Wasser, dem Salz und dem Gefrierschutzmittel bestehen. Die Wasser enthaltende Mischung kann im einfachsten Fall nur aus Wasser und dem Gefrierschutzmittel bestehen.

Die erfindungsgemäße Zusammensetzung benötigt zur Erzeugung von Sauerstoff keine Peroxidverbindung als Sauerstoffquelle und keine Metalloxidverbindung, insbesondere keine Metalloxidverbindung als Katalysator und keinen Oxidationskatalysator für Kohlenmonoxid. In einer Ausgestaltung umfasst die erfindungsgemäße Zusammensetzung auch keine der genannten Verbindungen und keinen Oxidationskatalysator für Kohlenmonoxid. Die erfindungsgemäße Zusammensetzung unterscheidet sich stark von den aus den EP 3 323 782 A1, EP 3 323 470 A1, EP 3 604 212 B1, WO 2006/001607 A1 und US 4 490 274 bekannten Zusammensetzungen zur Erzeugung von Sauerstoff.

Im Gegensatz zu der aus der US 2017/0263989 A1 bekannten nicht-wässrigen Zusammensetzung in der elektrochemischen Lithium-Luft-Zelle, umfasst die erfindungsgemäße Zusammensetzung zur Erzeugung von Sauerstoff eine Wasser enthaltende Lösung oder eine Wasser enthaltende Mischung. Enthielte die Zusammensetzung in der Lithium-Luft-Zelle Wasser, würde sie Sauerstoff bilden und die Lithium-Luft-Zelle zerstören.

Im Gegensatz zu dem aus der US 2021/0147232 A1 bekannten Verfahren ist bei der erfindungsgemäßen Zusammensetzung und beim erfindungsgemäßen Verfahren die Anwesenheit von Wasser in der Wasser enthaltenden Lösung oder Wasser enthaltenden Mischung essentiell für die Freisetzung des Sauerstoffs. Bei dem aus der US 2021/0147232 A1 bekannten Verfahren ist dagegen die Anwesenheit des Metallsalzes essentiell für die Freisetzung des Sauerstoffs.

Im Gegensatz zu der aus der US 4,963,327 bekannten Vorrichtung enthält die erfindungsgemäße Zusammensetzung kein Salz, das bei Reaktion mit Alkalihydroxiden und/oder - carbonaten im Wesentlichen unlösliche Verbindungen bildet. Bei der erfindungsgemäßen Zusammensetzung und dem damit durchgeführten erfindungsgemäßen Verfahren würde die massive Bildung unlöslicher Reaktionsprodukte zu einem verminderten Kontakt des Kaliumsuperoxids mit Wasser und damit zu einer verminderten Erzeugung von Sauerstoff führen.

Das erfindungsgemäße Verfahren gewährleistet eine auch bei sehr niedrigen Temperaturen skalierbare Erzeugung von Sauerstoff durch die erfindungsgemäße Zusammensetzung. Gleichzeitig erfolgt die Erzeugung von Sauerstoff durch die erfindungsgemäße Zusammensetzung kontinuierlich und gleichmäßig und in einem relativ großen Temperaturbereich, insbesondere in einem Temperaturbereich von -40 °C bis +70 °C. Die kontinuierliche und gleichmäßige Erzeugung von Sauerstoff kann dabei über einen verhältnismäßig langen Zeitraum gewährleistet werden.

Bei dem Sauerstoff kann es sich um atembaren Sauerstoff handeln, insbesondere für den Einsatz im Notfall. In diesem Fall wäre eine Zusammensetzung, aus der Sauerstoff nur in Spuren oder als Gemisch mit einem anderen nicht atembaren Gas, wie z.B. Kohlenstoffmonoxid, Ammoniak, Chlor oder einer Chlorverbindung oder mehreren Chlorverbindungen, erzeugt werden kann, keine Zusammensetzung zur Erzeugung von atembarem Sauerstoff.

Die Sauerstoffquelle ist Kaliumsuperoxid. Diese Sauerstoffquelle liegt bei Raumtemperatur und in einem für einen Notfallsauerstoffgenerator in Frage kommenden Temperaturbereich stets als Feststoff vor. Die Erfinder haben festgestellt, dass die erfindungsgemäße Zusammensetzung unmittelbar nach einem miteinander Inkontaktbringen der Sauerstoffquelle und der Wasser enthaltenden Lösung oder der Wasser enthaltenden Mischung Sauerstoff freisetzt. Sie haben weiterhin festgestellt, dass die Freisetzung von Sauerstoff selbst bei einer relativ niedrigen Temperatur, insbesondere bei einer Temperatur in einem Bereich von -40 °C bis -20 °C, unmittelbar und bei einer für ein Notfallsystem, beispielsweise in einem Flugzeug, geeigneten Skalierung in für die Sauerstoffversorgung eines Menschen ausreichender Menge erfolgt.

Die Wasser enthaltende Lösung kann eine solche Menge des Salzes oder des Salzes zusammen mit einer solchen Menge des Gefrierschutzmittels oder die Wasser enthaltende Mischung eine solche Menge des Gefrierschutzmittels enthalten, dass der Gefrierpunkt der Lösung oder der Mischung gegenüber dem Gefrierpunkt des Wassers um mindestens 15 °C, insbesondere um mindestens 20 °C, insbesondere um mindestens 25 °C, insbesondere um mindestens 30 °C, insbesondere um mindestens 35 °C, insbesondere um mindestens 40 °C, insbesondere um mindestens 45 °C, insbesondere um mindestens 50 °C, herabgesetzt ist. Bei der Wasser enthaltenden Lösung oder bei der Wasser enthaltenden Mischung handelt es sich jeweils um eine tiefgefrierende Lösung oder um eine tiefgefrierende Mischung. Dadurch, dass der Gefrierpunkt auf eine relativ niedrige Temperatur herabgesetzt ist, wird dank des flüssigen Zustands der Wasser enthaltenden Lösung oder der Wasser enthaltenden Mischung eine Sauerstofferzeugung bei relativ niedrigen Temperaturen gewährleistet.

Die Wasser enthaltende Lösung wird durch vollständiges oder teilweises Auflösen des Salzes in Wasser zubereitet. Das Alkalimetallhydroxid kann Lithiumhydroxid, Natriumhydroxid, Kaliumhydroxid, Rubidiumhydroxid oder Caesiumhydroxid sein. Das Alkalimetallhydroxid kann insbesondere Kaliumhydroxid sein. Das Alkalimetallhydroxid-Hydrat kann ein Hydrat von Lithiumhydroxid, ein Hydrat von Natriumhydroxid, ein Hydrat von Kaliumhydroxid, ein Hydrat von Rubidiumhydroxid oder ein Hydrat von Caesiumhydroxid sein. Das Alkalimetallchlorid kann Lithiumchlorid, Natriumchlorid, Kaliumchlorid, Rubidiumchlorid oder Caesiumchlorid sein. Das Alkalimetallchlorid-Hydrat kann ein Hydrat von Lithiumchlorid sein. Das Hydroxid mit einem organischen Kation kann ein Tetraalkylammonium-Hydroxid, insbesondere Tetramethylammonium-Hydroxid, Tetraethylammonium-Hydroxid, Tetrapropylammonium-Hydroxid, Tetrabutylammonium-Hydroxid, Triethylmethylammonium-Hydroxid, Tetrapentylammonium-Hydroxid oder Tetrahexylammonium-Hydroxid sein. Das Hydrat eines Hydroxids mit einem organischen Kation kann ein Hydrat eines Tetraalkylammonium-Hydroxids sein. Das Hydrat des Tetraalkylammonium-Hydroxids kann ein Hydrat von Tetramethylammonium-Hydroxid, ein Hydrat von Tetraethylammonium-Hydroxid, ein Hydrat von Tetrapropylammonium-Hydroxid, ein Hydrat von Tetrabutylammonium-Hydroxid, ein Hydrat von Triethylmethylammonium-Hydroxid, ein Hydrat von Tetrapentylammonium-Hydroxid oder ein Hydrat von Tetrahexylammonium-Hydroxid sein.

Das Tetraalkylammonium-Hydroxid oder das Hydrat des Tetraalklyammonium-Hydroxids kann in Wasser oder in einem einwertigen Alkohol, insbesondere Methanol, Ethanol, Propanol oder Isopropanol, gelöst vorliegen. Das Gesamtgewicht des Tetraalkylammonium-Hydroxids oder des Hydrats des Tetraalkylammonium-Hydroxids im Verhältnis zum Gesamtgewicht der Lösung oder der Mischung kann mindestens 5 Gew.-% und höchstens 80 Gew.-%, insbesondere mindestens 10 Gew.-% und höchstens 70 Gew.-%, insbesondere mindestens 20 Gew.-% und höchstens 60 Gew.-%, insbesondere mindestens 30 Gew.-% und höchstens 50 Gew.-%, betragen.

Das Gefrierschutzmittel kann einen einwertigen Alkohol, insbesondere Ethanol oder Octanol, einen zweiwertigen Alkohol, insbesondere Propylenglycol oder Ethylenglycol, einen dreiwertigen Alkohol, insbesondere Glycerol, oder ein Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, umfassen. Alternativ kann das Gefrierschutzmittel aus einem einwertigen Alkohol, insbesondere Ethanol oder Octanol, einem zweiwertigen Alkohol, insbesondere Propylenglycol oder Ethylenglycol, einem dreiwertigen Alkohol, insbesondere Glycerol, oder einem Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, bestehen.

Das Gesamtgewicht des Salzes oder das Gesamtgewicht des Salzes zusammen mit dem Gesamtgewicht des Gefrierschutzmittels in der Wasser enthaltenden Lösung im Verhältnis zum Gesamtgewicht der Wasser enthaltenden Lösung oder das Gesamtgewicht des Gefrierschutzmittels in der Wasser enthaltenden Mischung im Verhältnis zum Gesamtgewicht der Wasser enthaltenden Mischung kann mindestens 5 Gew.-%, insbesondere mindestens 10 Gew.-%, insbesondere mindestens 15 Gew.-%, insbesondere mindestsens 20 Gew.-%, insbesondere mindestens 25 Gew.-%, insbesondere mindestens 28 Gew.-%, insbesondere mindestens 30 Gew.-%, insbesondere mindestens 35 Gew.-%, insbesondere mindestens 40 Gew.-%, insbesondere mindestens 45 Gew.-%, insbesondere mindestens 50 Gew.-% betragen. Das maximale Gesamtgewicht des Salzes im Verhältnis zum Gesamtgewicht der Wasser enthaltenden Lösung ist erreicht, wenn die Wasser enthaltende Lösung mit dem weiteren Salz gesättigt ist. Die Wasser enthaltende Lösung kann eine gesättigte wässrige Lösung des Salzes sein. Unter einer gesättigten wässrigen Lösung des Salzes in der Wasser enthaltenden Lösung ist eine wässrige Lösung des Salzes zu verstehen, bei der bei einer gegebenen Temperatur eine maximal mögliche Menge des Salzes gelöst vorliegt. Das Salz kann in der Wasser enthaltenden Lösung auch in einer solchen Menge vorliegen, dass das Salz in der Wasser enthaltenden Lösung teilweise ungelöst, insbesondere in Form einer Suspension, vorliegt.

Die Erfinder haben festgestellt, dass ein relativ hohes Gesamtgewicht des Salzes oder des Salzes zusammen mit dem Gesamtgewicht des Gefrierschutzmittels in der Wasser enthaltenden Lösung oder des Gefrierschutzmittels in der Wasser enthaltenden Mischung im Verhältnis zum Gesamtgewicht der Wasser enthaltenden Lösung bzw. Mischung bei dem daraus resultierenden relativ niedrigen Gefrierpunkt der Lösung bzw. Mischung eine ausreichende Sauerstofferzeugung auch bei einer Temperatur weit unter 0 °C ermöglicht. Die Sauerstofferzeugung wird durch den flüssigen Zustand der Lösung bzw. Mischung bei relativ niedrigen Temperaturen ermöglicht. Das Salz und/oder das Gefrierschutzmittel können in der Lösung bzw. Mischung in einer solchen Konzentration vorliegen, dass die Wasser enthaltende Lösung bzw. Mischung bei einer Temperatur in einem Temperaturbereich von -80 °C bis 0 °C, insbesondere bei einer Temperatur in einem Temperaturbereich von -60 °C bis 0 °C, insbesondere bei einer Temperatur in einem Temperaturbereich von -50 °C bis -10 °C, insbesondere bei einer Temperatur in einem Temperaturbereich von -40 °C bis -20 °C, insbesondere bei einer Temperatur in einem Temperaturbereich von -35 °C bis -25 °C, flüssig ist. Dadurch wird die Erzeugung von Sauerstoff durch die erfindungsgemäße Zusammensetzung auch bei relativ niedrigen Temperaturen, insbesondere bei einer Temperatur in den genannten Temperaturbereichen, gewährleistet.

Das Salz in der Wasser enthaltenden Lösung kann insbesondere Kaliumhydroxid sein. Die Erfinder haben festgestellt, dass bei einem Gesamtgewicht des Kaliumhydroxids von 25 Gew.-% im Verhältnis zum Gesamtgewicht der Wasser enthaltenden Lösung der Gefrierpunkt der Wasser enthaltenden Lösung bei -40 °C liegt. Die Erfinder haben weiterhin festgestellt, dass bei einem Gesamtgewicht des Kaliumhydroxids von 28 Gew.-% im Verhältnis zum Gesamtgewicht der Wasser enthaltenden Lösung der Gefrierpunkt der Wasser enthaltenden Lösung bei -50 °C liegt. Sie haben weiterhin festgestellt, dass die Zusammensetzung Sauerstoff erzeugt, solange die Wasser enthaltende Lösung oder Mischung flüssig ist, d.h. auch bei einer Temperatur, die nur so wenig über dem Gefrierpunkt liegt, dass die Wasser enthaltende Lösung oder Mischung noch flüssig ist.

Die Sauerstoffquelle kann, insbesondere als Reinstoff, in fester Form vorliegen. Insbesondere kann sie als ein bei 25 °C in fester Form vorliegender Reinstoff vorliegen.

Die Sauerstoffquelle kann in einer ionischen Flüssigkeit, insbesondere in einer wasserfreien ionischen Flüssigkeit, in suspendierter Form, insbesondere in Form einer Paste, vorliegen. Die Sauerstoffquelle und eine ionische Flüssigkeit, insbesondere eine wasserfreie ionische Flüssigkeit, können in verpresster Form mit der, insbesondere wasserfreien, ionischen Flüssigkeit als Bindemittel vorliegen. Die Sauerstoffquelle und die ionische Flüssigkeit können dadurch als ein in fester Form vorliegender, durch Verpressung entstandener Formkörper vorliegen.

Die ionische Flüssigkeit ist ein aus mindestens einem Kation und höchstens 100 Kationen, insbesondere höchstens 80 Kationen, insbesondere höchstens 60 Kationen, insbesondere höchstens 40 Kationen, insbesondere höchstens 20 Kationen, insbesondere höchstens zehn Kationen, insbesondere höchstens neun Kationen, insbesondere höchstens acht Kationen, insbesondere höchstens sieben Kationen, insbesondere höchstens sechs Kationen, insbesondere höchstens fünf Kationen, insbesondere höchstens vier Kationen, insbesondere höchstens drei Kationen, insbesondere höchstens zwei Kationen, und mindestens einem Anion und höchstens 100 Anionen, insbesondere höchstens 80 Anionen, insbesondere höchstens 60 Anionen, insbesondere höchstens 40 Anionen, insbesondere höchstens 20 Anionen, insbesondere höchstens zehn Anionen, insbesondere höchstens neun Anionen, insbesondere höchstens acht Anionen, insbesondere höchstens sieben Anionen, insbesondere höchstens sechs Anionen, insbesondere höchstens fünf Anionen, insbesondere höchstens vier Anionen, insbesondere höchstens drei Anionen, insbesondere höchstens zwei Anionen, bestehendes weiteres Salz. Insbesondere kann die ionische Flüssigkeit ein aus einem oder zwei Kationen und einem oder zwei Anionen bestehendes Salz sein. In einer Ausgestaltung weist die ionische Flüssigkeit nur ein Kation und/oder nur ein Anion auf. Die ionische Flüssigkeit weist einen Schmelzpunkt von weniger als 100 °C auf. Es kann sich dabei um eine ionische Flüssigkeit handeln, die bei 85 °C, insbesondere bei 50 °C, insbesondere bei 0 °C, insbesondere bei -50 °C, flüssig ist. Hierbei und im Folgenden ist unter dem Begriff "Kation" eine Vielzahl von Kationen derselben Art und unter dem Begriff "Anion" eine Vielzahl von Anionen derselben Art zu verstehen. Zum Beispiel bedeutet das Merkmal "aus mindestens einem Kation und höchstens zehn Kationen und mindestens einem Anion und höchstens zehn Anionen bestehendes weiteres Salz", dass das weitere Salz aus einer Vielzahl von Kationen von mindestens einer Art und höchstens zehn Arten und aus einer Vielzahl von Anionen von mindestens einer Art und höchstens zehn Arten besteht.

Bei der ionischen Flüssigkeit handelt es sich nicht um eine Lösung eines Salzes in einem Lösungsmittel, wie z. B. Wasser, sondern um ein weiteres Salz, welches einen Schmelzpunkt von unter 100 °C aufweist. Es kann sich dabei um ein weiteres Salz handeln, welches auch bei einer Temperatur deutlich unter 100 °C in flüssigem Zustand vorliegt. Das Kation oder eines der Kationen kann ein Ammonium-Ion, ein substituiertes Ammonium-Ion, insbesondere ein Tetraalkylammonium-Ion, ein Phosphonium-Ion, ein substituiertes Phosphonium-Ion, insbesondere ein Tetraalkylphosphonium-Ion, ein N-monosubstituiertes oder ein N-disubstituiertes Pyrrolidinium-Ion, ein N-monosubstituiertes oder ein N',N-disubstituiertes Imidazolium-Ion oder ein N-monosubstituiertes Pyridinium-Ion sein. Das Anion oder eines der Anionen kann ein Halogenid-Ion, ein Tetrafluoroborat-Ion, ein Hexafluorophosphat-lon, ein Cyanoborat-Ion, ein substituiertes Cyanoborat-Ion, insbesondere ein Perfluoralkylcyanoborat-Ion, ein Sulfonat-Ion, insbesondere ein Perfluoralkylsulfonat-Ion, ein Bisperfluoralkylimid-Ion, ein Borat-Ion, ein substituiertes Borat-Ion, insbesondere ein Perfluoralkylborat-Ion, ein Phosphat-Ion, ein substituiertes Phosphat-Ion, insbesondere ein Perfluoralkylphosphat-Ion, oder ein Perfluoralkylfluorophosphat-Ion, sein. Der Bezeichnungsbestandteil "Perfluoralkyl" bezeichnet dabei allgemein einen aliphatischen Stoff, bei dem alle Wasserstoff-Atome, die an Kohlenstoff-Atome des davon abgeleiteten, nicht fluorierten Stoffes gebunden sind durch Fluor-Atome ersetzt sind, mit Ausnahme der Wasserstoff-Atome, deren Substitution die Art der vorhandenen funktionellen Gruppen verändern würde.

Ein Substituent des N-monosubstituierten Pyrrolidinium-Ions, des N-monosubstituierten Imidazolium-Ions und des N-monosubstituierten Pyridinium-Ions, und mindestens ein Substituent des N'-N-disubstituierten Imidazolium-Ions, und mindestens ein Substituent des N-disubstituierten Pyrrolidinium-Ions können unabhängig voneinander aus Alkyl, insbesondere Methyl, Ethyl, Propyl oder Butyl, Benzyl und Aryl ausgewählt sein.

Das Bis(perfluoralkyl)imid-Ion kann ein Ion mit der allgemeinen Formel [N(SO₂R^{F}ₓ)₂]⁻ sein, wobei x die Zahl der C-Atome im Perfluoralkylsubstituent R^{F} angibt. Vorzugsweise ist x = 1.

Der Perfluoralkylsubstituent R^{F} hat dabei die allgemeine Formel -CₓF₂ₓ₊₁. Ist *x* = 1 ist der Perfluoralkylsubstituent Perfluormethyl mit der Summenformel -CF₃. Ist *x* = 2 ist der Perfluoralkylsubstituent Perfluorethyl mit der Summenformel -C₂F₅. Ist *x* = 3 ist der Perfluoralkylsubstituent Perfluorpropyl mit der Summenformel -C₃F₇.

Das (Perfluoralkyl)(fluoro)(cyano)borat-Ion kann ein Ion mit der allgemeinen Formel [R^{F}*ₓ*BF*_{y}*(CN)*_{z}*]⁻ sein, wobei *x* = 0-4, wobei *y* = 0-3, wobei *z* = 0-4, wobei *x* + *y* + *z* = 4. Ist *x* = 0 handelt es sich um ein Fluorocyanoborat-Ion. Ist *y* = 0 handelt es sich um ein Perfluoralkylcyanoborat-lon. Ist z = 0 handelt es sich um ein Perfluoralkylfluoroborat-Ion. Ist x = 0 und ist *y* = 0, handelt es sich um ein Tetracyanoborat-Ion. Ist x = 0 und ist z = 0, handelt es sich um ein Tetrafluoroborat-Ion. Ist *y* = 0 und ist *z* = 0 handelt es sich um ein Tetrakis(perfluoralkyl)borat-lon.

Das Perfluoralkyl(fluoro)phosphat-Ion kann ein Ion mit der allgemeinen Formel [R^{F}*ₓ*PF_{6-*x*}]⁻sein, wobei x = 1-3. Ist x = 0 handelt es sich um ein Hexafluorophosphat-Ion.

Die Erfinder haben festgestellt, dass eine ionische Flüssigkeit, insbesondere eine ionische Flüssigkeit, die ein N-disubstituiertes Pyrrolidinium-Ion enthält, mit mindestens einem Alkylsubstituenten, insbesondere Methyl oder Butyl, oder mit zwei unterschiedlichen Alkylsubstituenten, insbesondere Methyl und Butyl, vorteilhaft ist. Die Erfinder haben weiterhin festgestellt, dass eine ionische Flüssigkeit, insbesondere eine ionische Flüssigkeit, die ein relativ hydrophobes Anion, insbesondere ein Cyanoborat-Ion, ein Perfluoralkylcyanoborat-lon, ein Perfluoralkylsulfonat-Ion, ein Bisperfluoralkylimid-Ion, ein Perfluoralkylborat-Ion, ein Perfluoralkylphosphat-Ion oder ein Perfluoralkylfluorophosphat-Ion, enthält, vorteilhaft ist. Durch ein Kation mit mindestens einem Alkylsubstituenten und/oder ein relativ hydrophobes Anion wird eine relativ hohe Hydrophobizität der ionischen Flüssigkeit gewährleistet. Eine relativ hohe Hydrophobizität der ionischen Flüssigkeit gewährleistet hierbei eine relativ geringe Hygroskopizität der ionischen Flüssigkeit. Die Erfinder haben weiterhin festgestellt, dass eine relativ geringe Hygroskopizität der ionischen Flüssigkeit in der erfindungsgemäßen Zusammensetzung eine relativ hohe Stabilität des relativ hydrolyseempfindlichen Kaliumsuperoxids gewährleistet. Die Erfinder haben des Weiteren festgestellt, dass eine ionische Flüssigkeit, insbesondere eine ionische Flüssigkeit, die ein Halogenid-Ion, ein Tetrafluoroborat-Ion, ein Hexafluorophosphat-Ion, ein Perfluoralkylcyanoborat-lon, insbesondere ein Perfluoralkylsulfonat-Ion, ein Bisperfluoralkylimid-Ion, ein Perfluoralkylborat-Ion, ein Perfluoralkylphosphat-Ion oder ein Perfluoralkylfluorophosphat-lon enthält, zudem eine relativ hohe elektrochemische Stabilität der ionischen Flüssigkeit gewährleistet. Die Erfinder gehen davon aus, dass die relativ hohe elektrochemische Stabilität insbesondere durch elektronegative Substituenten, insbesondere FluorSubstituenten, Perfluoralkyl-Substituenten und Cyano-Substituenten, gewährleistet wird. Eine relativ hohe elektrochemische Stabilität der ionischen Flüssigkeit verhindert, dass die ionische Flüssigkeit eine Reaktion mit einer reaktiven lonenspezies, insbesondere Superoxid-lonen, in der erfindungsgemäßen Zusammensetzung eingeht.

Zudem haben die Erfinder festgestellt, dass eine ionische Flüssigkeit, insbesondere eine ionische Flüssigkeit, die ein N-disubstituiertes Pyrrolidinium-Ion und/oder ein relativ hydrophobes Anion, insbesondere ein Cyanoborat-Ion, ein Perfluoralkylcyanoborat-Ion, ein Perfluoralkylsulfonat-Ion, ein Bisperfluoralkylimid-Ion, ein Perfluoralkylborat-Ion, ein Perfluoralkylphosphat-lon oder ein Perfluoralkylfluorophosphat-Ion, enthält, eine relativ gleichmäße Erzeugung von Sauerstoff durch die Sauerstoffquelle über einen relativ langen Zeitraum gewährleistet.

Die ionische Flüssigkeit kann eine ionische Flüssigkeit sein, die in einem Temperaturbereich von -60 °C bis +150 °C, insbesondere in einem Temperaturbereich von -55 °C bis +140 °C, insbesondere in einem Temperaturbereich von -50 °C bis +130 °C, insbesondere in einem Temperaturbereich von -45 °C bis +120 °C, insbesondere in einem Temperaturbereich von -40 °C bis +110 °C, insbesondere in einem Temperaturbereich von -35 °C bis +100 °C, insbesondere in einem Temperaturbereich von -30 °C bis +90 °C, insbesondere in einem Temperaturbereich von -25 °C bis +80 °C, insbesondere in einem Temperaturbereich von -20 °C bis +70 °C, in flüssigem Zustand ist.

Beispiele geeigneter ionischer Flüssigkeiten sind [[BMPL]Cl, [BMPL][CF₃SO₃], [BMPL][C₂F₅SO₃], [BMPL][C₄F₉SO₃], [BMPL][N(SO₂CF₃)₂], [BMPL][BF₄], [BMPL][BF₂(CN)₂], [BMPL][BF(CN)₃], [BMPL][B(CN)₄], [BMPL][CF₃BF₃], [BMPL][C₂F₅BF₃], [BMPL][CF₃BF₂(CN)], [BMPL][C₂F₅BF₂(CN)], [BMPL][CF₃BF(CN)₂], [BMPL][C₂F₅BF(CN)₂], [BMPL][CF₃B(CN)₃], [BMPL][C₂F₅B(CN)₃], [BMPL][PF₆], [BMPL][C₂F₅PF₅], [BMPL][(C₂F₅)₂PF₄], [BMPL][(C₂F₅)₃PF₃], [HMIm]Cl, [HMIm][CF₃SO₃], [HMIm][C₂F₅SO₃], [HMIm][C₄F₉SO₃], [HMIm][N(SO₂CF₃)₂], [HMIm][BF₄], [HMlm][BF₂(CN)₂], [HMIm][BF(CN)₃], [HMIm][B(CN)₄], [HMIm][CF₃BF₃], [HMIm][C₂F₅BF₃], [HMIm][CF₃BF₂(CN)], [HMIm][C₂F₅BF₂(CN)], [HMIm][CF₃BF(CN)₂], [HMIm][C₂F₅BF(CN)₂], [HMIm][CF₃B(CN)₃], [HMIm][C₂F₅B(CN)₃], [HMIm][PF₆], [HMIm][C₂F₅PF₅], [HMIm][(C₂F₅)₂PF₄], [HMIm][(C₂F₅)₃PF₃], [BMIM]Cl, [BMIm][CF₃SO₃], [BMIm][C₂F₅SO₃], [BMIm][C₄F₉SO₃], [BMIm][N(SO₂CF₃)₂], [BMIm][BF₄], [BMIm][B_{F2}(CN)₂], [BMIm][BF(CN)₃], [BMIm][B(CN)₄], [BMIm][CF₃BF₃], [BMIm][C₂F₅BF₃], [BMIm][CF₃BF₂(CN)], [BMIm][C₂F₅BF₂(CN)], [BMIm][CF₃BF(CN)₂], [BMIm][C₂F₅BF(CN)₂], [BMIm][CF₃B(CN)₃], [BMIm][C₂F₅B(CN)₃], [BMIm][PF₆], [BMIm][C₂F₅PF₅], [BMIm][(C₂F₅)₂PF₄], [BMIm][(C₂F₅)₃PF₃], [EMIm][CF₃SO₃], [EMIm][C₂F₅SO₃], [EMIm][C₄F₉SO₃], [EMIm][N(SO₂CF₃)₂], [EMIm][BF₄], [EMIm][BF₂(CN)₂], [EMIm][BF(CN)₃], [EMIm][B(CN)₄], [EMIm][CF₃BF₃], [EMIm][C₂F₅BF₃], [EMIm][CF₃BF₂(CN)], [EMIm][C₂F₅BF₂(CN)], [EMIm][CF₃BF(CN)₂], [EMIm][C₂F₅BF(CN)₂], [EMIm][CF₃B(CN)₃], [EMIm][C₂F₅B(CN)₃], [EMIm][PF₆], [EMIm][C₂F₅PF₅], [EMIm][(C₂F₅)₂PF₄] und [EMIm][(C₂F₅)₃PF₃]. Weitere Beispiele geeigneter ionische Flüssigkeiten sind [MMIm][SO₄Me], [EMIm][SO₄Et], [BMIm][SO₄Me], [BMIm][SO₄Bu], [MMIm][PO₄Me₂], [EMIm][PO₄Et₂], [EEIm][PO₄Et₂], [BMIm][PO₄Me₂], [BMIm][PO₄Bu₂], [EMIm][H₂PO₄], [EMIm][HSO₄], [BMIm][FeCl₄], sowie [BMIm][BF₄], [BMIm][PF₆], [HMIm][BF₄], [HMIm][PF₆]. Dabei gilt folgende Nomenklatur: Die erste eckige Klammer beinhaltet das Kation und die zweite eckige Klammer das Anion. Zusätzlich gelten folgende etablierte Abkürzungen: BMPL: 1-Butyl-1-methylpyrrolidinium, BMIm: 1-Butyl-3-Methylimidazolium, HMIm: 1-Hexyl-3-Methylimidazolium, EMIm: 1-Ethyl-3-Methylimidazolium, SO₄Me: Methylsulfat, SO₄Et: Ethylsulfat, SO₄Bu: Butylsulfat, PO₄Me₂: Dimethylposphat, PO₄Et₂: Diethylphosphat, PO₄Bu₂: Dibutylphosphat, HSO₄: Hydrogensulfat, H₂PO₄: Dihydrogenphosphat, FeCl₄: Tetrachloroferrat, BF₄: Tetrafluoroborat und PF₆: Hexafluorophosphat.

Zur Veranschaulichung sind im Folgenden drei verschiedene ionische Flüssigkeiten mit Strukturformeln gezeigt.

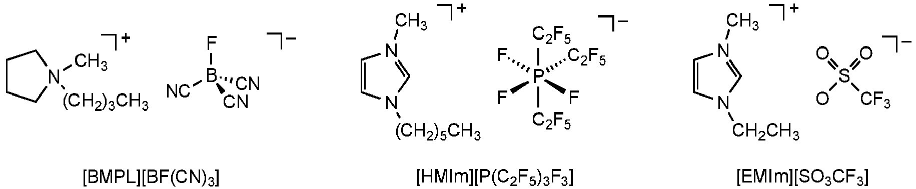

Die ionische Flüssigkeit wird nicht nur dann als wasserfrei erachtet, wenn sie kein Wasser enthält, sondern auch dann, wenn sie Spuren von Wasser, insbesondere einen Wassergehalt von höchstens 1 Gew.-%, insbesondere von höchstens 0.5 Gew.-%, insbesondere von höchstens 0.1 Gew.-%, insbesondere von höchstens 0.05 Gew.-%, insbesondere von höchstens 0.01 Gew.-%, insbesondere von höchstens 0.005 Gew.-%, insbesondere von höchstens 0.001 Gew.-% enthält. Die Erfinder haben festgestellt, dass in der erfindungsgemäßen Zusammensetzung keine chemische Reaktion oder allenfalls eine chemische Reaktion bis zum Verbrauch des in Spuren enthaltenen Wassers zwischen der Sauerstoffquelle und der wasserfreien ionischen Flüssigkeit stattfindet. Zudem wird dadurch, dass die Sauerstoffquelle in der ionischen Flüssigkeit in suspendierter Form, insbesondere in Form einer Paste, vorliegt oder dadurch, dass die Sauerstoffquelle und die ionische Flüssigkeit in verpresster Form mit der ionischen Flüssigkeit als Bindemittel vorliegen, gewährleistet, dass die Sauerstoffquelle vor einem ungewollten Kontakt mit Wasser, insbesondere mit Luftfeuchtigkeit, relativ gut geschützt ist. Der schützende Effekt der ionischen Flüssigkeit, insbesondere einer wasserfreien ionischen Flüssigkeit, ist dabei umso stärker, je hydrophober die ionische Flüssigkeit ist. Bei Kontakt der Sauerstoffquelle mit Wasser, insbesondere mit Luftfeuchtigkeit, erfolgt eine hydrolytische Reaktion des Wassers mit der Sauerstoffquelle. Die hydrolytische Reaktion der Sauerstoffquelle führt zu einer ungewollten Sauerstofffreisetzung durch Zersetzung der Sauerstoffquelle. Durch den schützenden Effekt der ionischen Flüssigkeit wird eine relativ hohe Stabilität der Sauerstoffquelle gegenüber Luftfeuchtigkeit gewährleistet. Zudem haben die Erfinder festgestellt, dass durch ein Vorliegen der Sauerstoffquelle in suspendierter Form in der ionischen Flüssigkeit, insbesondere in Form einer Paste, oder durch ein Vorliegen der Sauerstoffquelle und der ionischen Flüssigkeit in verpresster Form mit der ionischen Flüssigkeit als Bindemittel eine relativ gleichmäßige Erzeugung von Sauerstoff über einen relativ langen Zeitraum, insbesondere über einen Zeitraum von mindestens 2 Stunden, insbesondere über einen Zeitraum von mindestens 2,5 Stunden, insbesondere über einen Zeitraum von mindestens 3 Stunden, insbesondere über einen Zeitraum von mindestens 3,5 Stunden, gewährleistet werden kann.

In einer Ausführungsform der Erfindung umfasst die Zusammensetzung als weiteren Bestandteil mindestens ein Additiv. Das Additiv kann unabhängig voneinander aus als Feststoff vorliegendem Natriumdihydrogenphosphat oder Kaliumhydroxid, einem Zuschlagstoff und einem Antischaummittel ausgewählt sein. Der Zuschlagstoff kann ein Schichtsilikat, insbesondere Glimmer, oder pyrogene Kieselsäure sein. Das Antischaummittel kann Octanol, Paraffinwachs oder ein Polysiloxan umfassen oder daraus bestehen. Die Sauerstoffquelle und das Additiv können miteinander in verpresster Form vorliegen. Die Sauerstoffquelle und das Additiv können miteinander in einem in fester Form vorliegenden, durch Verpressung entstandenen Formkörper vorliegen. Das Additiv kann entweder ein zur Beschleunigung oder zur Verlangsamung der Sauerstofferzeugung dienendes Additiv sein. Beispielsweise bewirkt ein saures Additiv, wie z.B. als Feststoff vorliegendes Natriumdihydrogenphosphat, eine Beschleunigung der Sauerstofferzeugung und ein basisches Additiv, wie z.B. als Feststoff vorliegendes Kaliumhydroxid, eine Verlangsamung der Sauerstofferzeugung. Die pyrogene Kieselsäure kann zudem verwendet werden, um ein Aufschwimmen der Sauerstoffquelle bei der Reaktion zur Erzeugung von Sauerstoff in der Wasser enthaltenden Lösung oder in der Wasser enthaltenden Mischung zu unterbinden. Das funktioniert besonders gut, wenn die Sauerstoffquelle und die pyrogene Kieselsäure miteinander in einem durch Verpressung entstandenen Formkörper vorliegen. Dadurch, dass das Aufschwimmen der Sauerstoffquelle unterbunden wird, wird eine relativ gleichmäßige Zersetzung der Sauerstoffquelle bei der Reaktion zur Erzeugung von Sauerstoff in der Wasser enthaltenden Lösung oder in der Wasser enthaltenden Mischung gewährleistet. Das Antischaummittel kann eine Schaumbildung bei der Erzeugung des Sauerstoffs unterbinden und/oder den bei der Erzeugung des Sauerstoffs entstandenen Schaum zerstören. Mindestens ein Additiv kann in der Zusammensetzung in einer Form vorhanden sein, die eine verzögerte Freisetzung des Additivs bewirkt. Zum Beispiel kann es dazu in einer Kapsel eingekapselt sein, die sich langsam auflöst, wenn sie mit der Wasser enthaltenden Lösung oder der Wasser enthaltenden Mischung in Kontakt kommt.

Das Gesamtgewicht der Sauerstoffquelle im Verhältnis zum Gesamtgewicht der erfindungsgemäßen Zusammensetzung kann mindestens 5 Gew.-% und höchstens 90 Gew.-%, insbesondere mindestens 20 Gew.-% und höchstens 80 Gew.-%, betragen. Der verbleibende Teil der Zusammensetzung besteht dabei aus der Wasser enthaltenden Lösung oder der Wasser enthaltenden Mischung und optional der ionischen Flüssigkeit und/oder dem weiteren Bestandteil.

Die Sauerstoffquelle, das Salz oder das Salz und das Gefrierschutzmittel der Wasser enthaltenden Lösung, das Gefrierschutzmittel der Wasser enthaltenden Mischung, die Wasser enthaltende Lösung und/oder die Wasser enthaltende Mischung der erfindungsgemäßen Zusammensetzung können in einem Kit enthalten sein. Der Kit kann ferner jeden weiteren Bestandteil, insbesondere die ionische Flüssigkeit und/oder das Additiv, umfassen, der optional von der erfindungsgemäßen Zusammensetzung umfasst ist.

Die Erfindung betrifft ferner einen Sauerstoffgenerator, insbesondere zur Erzeugung von atembarem Sauerstoff, insbesondere für den Einsatz in Notfällen, wie beispielsweise in einem Notfallrettungssystem. Der Sauerstoffgenerator umfasst ein erstes und ein zweites Kompartiment, eine Öffnung zur Freisetzung oder eine Leitung zur Ableitung von im Sauerstoffgenerator entstehendem Sauerstoff und sämtliche Bestandteile der erfindungsgemäßen Zusammensetzung. Dabei ist die Sauerstoffquelle in dem ersten Kompartiment und die Wasser enthaltende Lösung oder die Wasser enthaltende Mischung in dem zweiten Kompartiment enthalten. Der Sauerstoffgenerator umfasst eine das erste Kompartiment vom zweiten Kompartiment separierende physikalische Barriere und ein Mittel zur Überwindung der physikalischen Barriere, wobei die physikalische Barriere so angeordnet ist, dass die Sauerstoffquelle und die Wasser enthaltende Lösung oder die Wasser enthaltende Mischung nach Überwindung der physikalischen Barriere miteinander in Kontakt kommen. Die Öffnung oder Leitung ist dabei so angeordnet, dass dadurch entstehender Sauerstoff durch die Öffnung oder durch die Leitung austritt.

Die physikalische Barriere kann ein Ventil sein, das durch das Mittel geöffnet werden kann. Die physikalische Barriere kann auch eine Membran oder eine Folie sein, wobei das Mittel zur Überwindung der physikalischen Barriere ein Mittel zum Entfernen, Zerstören oder Durchlochen der Membran oder Folie, insbesondere eine Klinge oder ein spitzer Gegenstand, ist. Die Folie kann eine Kunststofffolie oder eine Metallfolie sein.

Die in dem Sauerstoffgenerator enthaltenen Bestandteile der erfindungsgemäßen Zusammensetzung können neben der Sauerstoffquelle und der Wasser enthaltenden Lösung oder der Wasser enthaltenden Mischung optional jeden der oben genannten weiteren Bestandteile der erfindungsgemäßen Zusammensetzung, insbesondere die ionische Flüssigkeit und/oder das Additiv, umfassen. Die ionische Flüssigkeit kann in dem ersten Kompartiment enthalten sein. Das Additiv kann entweder in dem ersten Kompartiment oder in dem zweiten Kompartiment enthalten sein.

Der Sauerstoffgenerator kann zusätzlich mindestens ein Verzögerungsmittel umfassen. Das Verzögerungsmittel kann so angeordnet und insbesondere so ausgebildet sein, dass eine Gesamtmenge des im Sauerstoffgenerator vorhandenen Wasser enthaltenden Lösung oder eine Gesamtmenge der im Sauerstoffgenerator vorhandenen Wasser enthaltenden Mischung nach Überwindung der physikalischen Barriere erst nach und nach mit einer Gesamtmenge der im Sauerstoffgenerator vorhandenen Sauerstoffquelle in Kontakt kommt. Das Verzögerungsmittel kann eine die Sauerstoffquelle umgebende, semipermeable, d.h. gasdurchlässige und flüssigkeitsundurchlässige, Membran, die mindestens ein die Flüssigkeitszufuhr beschränkendes Loch aufweist, oder ein die Sauerstoffquelle umgebendes oder bedeckendes oder mit der Sauerstoffquelle vermischtes und gegenüber der Sauerstoffquelle und entweder der Wasser enthaltenden Lösung oder der Wasser enthaltenden Mischung inertes Schüttgut, insbesondere Sand oder Glasperlen, sein. Durch die Beschränkung der Flüssigkeitszufuhr wird das Inkontaktkommen der von der Membran umgebenen Sauerstoffquelle mit der Lösung oder Mischung verzögert, der Sauerstoffaustritt durch die Semipermeabilität der Membran jedoch nicht beschränkt. Die Erfinder haben festgestellt, dass durch das Verzögerungsmittel ein relativ schnelles Zersetzen der Sauerstoffquelle, insbesondere durch ein schnelles Inkontaktkommen der gesamten Sauerstoffquelle mit der gesamten Wasser enthaltenden Lösung oder mit der gesamten Wasser enthaltenden Mischung verhindert wird. Zudem wird dadurch ein Aufschwimmen und/oder Aufschäumen der Sauerstoffquelle bei der Reaktion zur Erzeugung von Sauerstoff in der Wasser enthaltenden Lösung oder der Wasser enthaltenen Mischung verhindert. Damit wird eine relativ gleichmäßige Sauerstofffreisetzung über einen relativ langen Zeitraum begünstigt.

Die Erfindung betrifft ferner ein Verfahren zur Erzeugung von Sauerstoff, insbesondere von atembarem Sauerstoff, insbesondere für den Einsatz in Notfällen, wie beispielsweise in einem Notfallrettungssystem. Das Verfahren umfasst das Bereitstellen und das miteinander Inkontaktbringen der Sauerstoffquelle und der Wasser enthaltenden Lösung oder der Wasser enthaltenden Mischung der erfindungsgemäßen Zusammensetzung und optional der ionischen Flüssigkeit und/oder des Additivs der erfindungsgemäßen Zusammensetzung.

Das Bereitstellen und/oder das miteinander Inkontaktbringen der Sauerstoffquelle und der Wasser enthaltenden Lösung oder der Wasser enthaltenden Mischung kann bei einer Temperatur in einem Bereich von -70 °C bis +110 °C, insbesondere in einem Bereich von -60 °C bis +90 °C, insbesondere in einem Bereich von -50 °C bis +80 °C, insbesondere in einem Bereich von -40 °C bis +70 °C, insbesondere in einem Bereich von -40 °C bis 0 °C, insbesondere in einem Bereich von -40 °C bis -20 °C erfolgen. Die Erfinder haben festgestellt, dass durch das miteinander Inkontaktbringen der Sauerstoffquelle und der Wasser enthaltenden Lösung oder der Wasser enthaltenden Mischung selbst bei einer relativ niedrigen Temperatur, insbesondere bei einer Temperatur in einem Bereich von -40 °C bis -20 °C, die Erzeugung von Sauerstoff durch die erfindungsgemäße Zusammensetzung unmittelbar erfolgt.

Die Erfinder haben weiterhin festgestellt, dass das erfindungsgemäße Verfahren eine skalierbare Erzeugung von Sauerstoff gewährleistet. Die Erfinder haben zudem festgestellt, dass das erfindungsgemäße Verfahren eine kontinuierliche und gleichmäßige Erzeugung von Sauerstoff in einem relativ großen Temperaturbereich, insbesondere in einem Temperaturbereich von -40 °C bis +70 °C, gewährleistet. Die Erfinder haben zudem festgestellt, dass das erfindungsgemäße Verfahren die Erzeugung von Sauerstoff ohne Atemgifte, insbesondere ohne Kohlenstoffmonoxid, ohne Ammoniak, ohne Chlor und ohne eine Chlorverbindung, gewährleistet.

Weiterhin betrifft die Erfindung eine Verwendung der Sauerstoffquelle und der Wasser enthaltenden Lösung oder der Wasser enthaltenden Mischung der erfindungsgemäßen Zusammensetzung und optional der ionischen Flüssigkeit und/oder des Additivs der erfindungsgemäßen Zusammensetzung zur Erzeugung von, insbesondere atembarem Sauerstoff, insbesondere für den Einsatz in Notfällen, wie in einem Notfallrettungssystem. Bei der erfindungsgemäßen Verwendung kann es sich um eine Verwendung in einer hermetisch abgeschlossenen Umgebung, wie beispielsweise in einem U-Boot oder einer Raumkapsel, oder in einer Notfallsituation, wie beispielsweise bei einem plötzlichen Druckabfall in einem Flugzeug, handeln.

Alle in der Beschreibung angegebenen Merkmale sind als Merkmale zu verstehen, die auf alle Ausführungsformen der Erfindung anwendbar sind. Dies bedeutet beispielsweise, dass ein für die Zusammensetzung angegebenes Merkmal auch auf den Sauerstoffgenerator, das erfindungsgemäße Verfahren und/oder die erfindungsgemäße Verwendung angewendet werden kann und umgekehrt.

Die Erfindung wird anhand der folgenden Ausführungsbeispiele näher erläutert. Es zeigen
- Fig. 1: eine graphische Darstellung des bei den Reaktionen zur Freisetzung von Sauerstoff freigesetzten Sauerstoffvolumens in Abhängigkeit der Umgebungstemperatur und der Reaktionszeit,
- Fig. 2: eine graphische Darstellung der Sauerstoffflussraten in Abhängigkeit der Umgebungstemperatur und der Reaktionszeit bei Reaktionen zur Freisetzung von Sauerstoff,
- Fig. 3: eine graphische Darstellung des bei den Reaktionen zur Freisetzung von Sauerstoff freigesetzten Sauerstoffvolumens in Abhängigkeit der Wasser enthaltenden Lösung und der Reaktionszeit,
- Fig. 4: eine graphische Darstellung der bei der Reaktion zur Freisetzung von Sauerstoff freigesetzten Sauerstoffvolumens durch Natriumperoxid als Sauerstoffquelle in Abhängigkeit der Reaktionszeit,
- Fig. 5: eine weitere graphische Darstellung des bei den Reaktionen zur Freisetzung von Sauerstoff freigesetzten Sauerstoffvolumens in Abhängigkeit der Wasser enthaltenden Lösung und der Reaktionszeit,
- Fig. 6: eine graphische Darstellung der Sauerstoffflussraten in Abhängigkeit der Wasser enthaltenden Lösung und der Reaktionszeit bei Reaktionen zur Freisetzung von Sauerstoff,
- Fig. 7: eine graphische Darstellung des bei den Reaktionen zur Freisetzung von Sauerstoff freigesetzten Sauerstoffvolumens in Abhängigkeit des Reaktordurchmessers und der Reaktionszeit,
- Fig. 8: eine graphische Darstellung der Sauerstoffflussraten in Abhängigkeit des Reaktordurchmessers und der Reaktionszeit bei Reaktionen zur Freisetzung von Sauerstoff,
- Fig. 9: eine graphische Darstellung des bei den Reaktionen zur Freisetzung von Sauerstoff freigesetzten Sauerstoffvolumens in Abhängigkeit der Reaktorgrundfläche und der Reaktionszeit,
- Fig. 10: eine graphische Darstellung der Sauerstoffflussraten in Abhängigkeit der Reaktorgrundfläche und der Reaktionszeit bei Reaktionen zur Freisetzung von Sauerstoff,
- Fig. 11: eine graphische Darstellung des linearen Zusammenhangs zwischen Reaktorgrundfläche und Sauerstoffflussraten bei Reaktionen zur Freisetzung von Sauerstoff,
- Fig. 12: eine graphische Darstellung des bei den Reaktionen zur Freisetzung von Sauerstoff freigesetzten Sauerstoffvolumens in Abhängigkeit der Zugabegeschwindigkeit der Wasser enthaltenden Lösung und der Reaktionszeit,
- Fig. 13: eine graphische Darstellung der Sauerstoffflussraten in Abhängigkeit der Zugabegeschwindigkeit der Wasser enthaltenden Lösung und der Reaktionszeit bei Reaktionen zur Freisetzung von Sauerstoff,
- Fig. 14: eine graphische Darstellung des bei den Reaktionen zur Freisetzung von Sauerstoff freigesetzten Sauerstoffvolumens in Abhängigkeit der Höhe und Art einer Schüttung und der Reaktionszeit,
- Fig. 15: eine graphische Darstellung der Sauerstoffflussraten in Abhängigkeit der Höhe und Art einer Schüttung und der Reaktionszeit bei Reaktionen zur Freisetzung von Sauerstoff,
- Fig. 16: eine graphische Darstellung des bei den Reaktionen zur Freisetzung von Sauerstoff freigesetzten Sauerstoffvolumens in Abhängigkeit der Form der Sauerstoffquelle und der Reaktionszeit,
- Fig. 17: eine graphische Darstellung der Sauerstoffflussraten in Abhängigkeit der Form der Sauerstoffquelle und der Reaktionszeit bei Reaktionen zur Freisetzung von Sauerstoff,
- Fig. 18: eine weitere graphische Darstellung des bei den Reaktionen zur Freisetzung von Sauerstoff freigesetzten Sauerstoffvolumens in Abhängigkeit der Form der Sauerstoffquelle und der Reaktionszeit,
- Fig. 19: eine weitere graphische Darstellung der Sauerstoffflussraten in Abhängigkeit der Form der Sauerstoffquelle und der Reaktionszeit bei Reaktionen zur Freisetzung von Sauerstoff,
- Fig. 20: eine graphische Darstellung des bei den Reaktionen zur Freisetzung von Sauerstoff mit und ohne ionischer Flüssigkeit freigesetzten Sauerstoffvolumens in Abhängigkeit der Reaktionszeit,
- Fig. 21: eine graphische Darstellung der Sauerstoffflussraten in Abhängigkeit der Reaktionszeit bei Reaktionen zur Freisetzung von Sauerstoff mit und ohne ionischer Flüssigkeit,
- Fig. 22: eine graphische Darstellung des bei der Reaktion zur Freisetzung von Sauerstoff freigesetzten Sauerstoffvolumens in Abhängigkeit der Reaktionszeit,
- Fig. 23: eine graphische Darstellung der Sauerstoffflussrate in Abhängigkeit der Reaktionszeit bei der Reaktion zur Freisetzung von Sauerstoff,
- Fig. 24: eine graphische Darstellung des bei den Reaktionen zur Freisetzung von Sauerstoff freigesetzten Sauerstoffvolumens in Abhängigkeit der ionischen Flüssigkeit und der Reaktionszeit,
- Fig. 25: eine graphische Darstellung der Sauerstoffflussraten in Abhängigkeit der ionischen Flüssigkeit und der Reaktionszeit bei Reaktionen zur Freisetzung von Sauerstoff,
- Fig. 26: eine weitere graphische Darstellung des bei den Reaktionen zur Freisetzung von Sauerstoff freigesetzten Sauerstoffvolumens in Abhängigkeit der Umgebungstemperatur und der Reaktionszeit und
- Fig. 27: eine weitere graphische Darstellung der Sauerstoffflussraten in Abhängigkeit der Umgebungstemperatur und der Reaktionszeit bei Reaktionen zur Freisetzung von Sauerstoff.

Die in den Figuren und im folgenden Text verwendete Abkürzung "IL" hat die Bedeutung "ionische Flüssigkeit".

### 1. Ausführungsbeispiel:

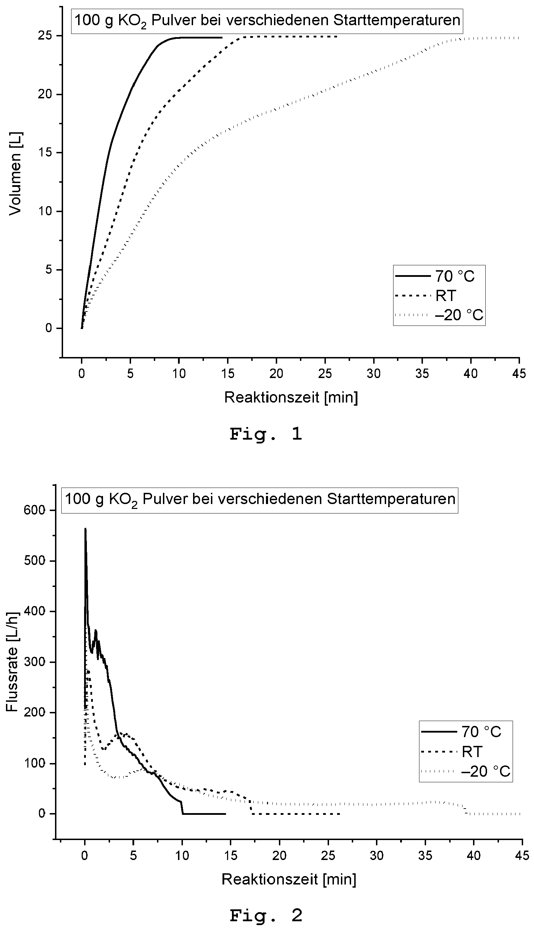

Jeweils 100 g pulverförmiges Kaliumsuperoxid wurde als Sauerstoffquelle in drei zylindrische Reaktionsgefäße mit einem Innendurchmesser von 55 mm zugegeben. Bei einer Umgebungstemperatur von +70 °C, Raumtemperatur oder -20 °C wurde die Reaktion zur Erzeugung von Sauerstoff durch Zugabe von jeweils 100 mL einer auf die jeweilige Umgebungstemperatur temperierten wässrigen 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Ergebnisse sind in den Figuren 1 und 2 und in der Tabelle 1 dargestellt.

**Tabelle 1:**

| Start-temperatur [°C] | Flussrateₘₐₓ [L/h] | Reaktions-temperatur [°C] | O₂ Volumen [L] | O₂ Volumen [%] | Reaktionsdauer [min] |
|---|---|---|---|---|---|
| -20 | 371 | 45 | 24.9 | 99 | 39 |
| RT | 287 | 64 | 24.9 | 99 | 17 |
| +70 | 564 | 85 | 24.9 | 99 | 10 |

Daraus ist ersichtlich, dass bei einer Umgebungstemperatur von +70 °C die maximale Ausbeute an Gasvolumen von 24,9 L nach 10 Minuten Reaktionszeit erreicht wird. Bei einer Umgebungstemperatur von Raumtemperatur wird die maximale Ausbeute an Gasvolumen von 24,9 L nach 17 Minuten Reaktionszeit erreicht. Bei einer Umgebungstemperatur von -20 °C wird die maximale Ausbeute an Gasvolumen von 24,9 L nach 39 Minuten Reaktionszeit erreicht. Das durch die gemessenen Flussraten ermittelte Flusskurvenprofil verläuft bei einer Umgebungstemperatur von -20 °C deutlich Plateau-förmiger. Durch eine Umgebungstemperatur von -20 °C erfolgt die Sauerstofffreisetzung kontinuierlicher und gleichmäßiger.

### 2. Ausführungsbeispiel:

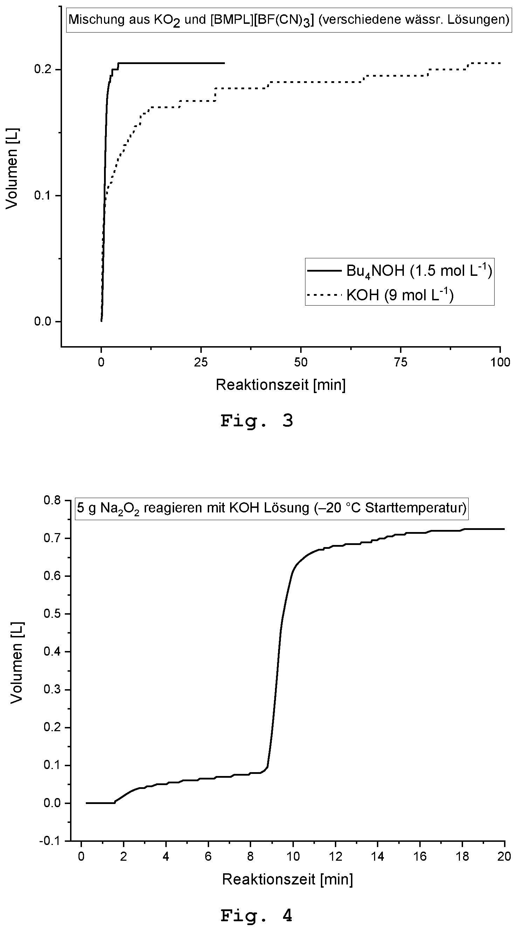

Jeweils 1 g pulverförmiges Kaliumsuperoxid wurde als Sauerstoffquelle in zwei zylindrische Reaktionsgefäße mit einem Innendurchmesser von 24 mm vorgelegt. Zugegeben wurden jeweils 0.5 g [BMPL][BF(CN)₃]. Anschließend wurde bei einer Umgebungstemperatur von Raumtemperatur die Reaktion zur Erzeugung von Sauerstoff durch Zugabe von entweder 2 mL einer wässrigen 9M Kaliumhydroxid-Lösung oder 2 mL einer wässrigen 1,5M Tetrabutylammoniumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurde die Länge der Reaktionszeit gemessen. Die Ergebnisse sind in der Figur 3 dargestellt. Daraus ist ersichtlich, dass bei Zugabe einer wässrigen Tetrabutylammoniumhydroxid-Lösung die maximale Ausbeute an Gasvolumen von 0,21 L nach 4 Minuten Reaktionszeit erreicht wird. Durch Zugabe einer wässrigen Kaliumhydroxid-Lösung wird die maximale Ausbeute an Gasvolumen von 0,21 L nach 92 Minuten Reaktionszeit erreicht. Durch Zugabe der wässrigen Kaliumhydroxid-Lösung erfolgt die Sauerstofffreisetzung über einen längeren Zeitraum.

### 3. Ausführungsbeispiel:

5 g pulverförmiges Natriumperoxid wurde als Sauerstoffquelle in ein zylindrisches Reaktionsgefäß vorgelegt. Anschließend wurden bei einer Umgebungstemperatur von -20 °C 5 mL einer auf eine Umgebungstemperatur von -20 °C temperierten wässrigen 6.9M Kaliumhydroxid-Lösung mit 2mol% des metallhaltigen Katalysators Manganacetat (Abkürzung: Mn(OAc)₂) zugegeben. Das Reaktionsgefäß wurde verschlossen und der durch die Reaktion zur Erzeugung von Sauerstoff freigesetzte Sauerstoff durch einen Trommelgaszähler zur Messung des Volumens des erzeugten Sauerstoffs aus dem Reaktionsgefäß geleitet. Zusätzlich wurde die Länge der Reaktionszeit gemessen. Die Reaktion wurde nach 20 Minuten abgebrochen. Das Ergebnis ist in der Figur 4 dargestellt. Daraus ist ersichtlich, dass bei Natriumperoxid als Sauerstoffquelle und bei einer Umgebungstemperatur von -20 °C eine durch das Erwärmen der Zusammensetzung messbare Steigerung des Gasvolumens nach 8 Minuten erreicht. Die Reaktion zur Erzeugung von Sauerstoff wird jedoch erst nach 2 Minuten initiiert. Eine maximale Ausbeute an Gasvolumen von 725 mL wird nach 18 Minuten erreicht. Im Gegensatz zu der in den Figuren 1 und 2 und Tabelle 1 dargestellten Ergebnissen verläuft die Reaktion zur Erzeugung von Sauerstoff mit Natriumperoxid als Sauerstoffquelle deutlich verzögerter ab als mit Kaliumsuperoxid als Sauerstoffquelle. Zudem ist bei der Erzeugung von Sauerstoff durch Natriumperoxid die Zugabe des metallhaltigen Katalysators Mn(OAc)₂ nötig.

### 4. Ausführungsbeispiel:

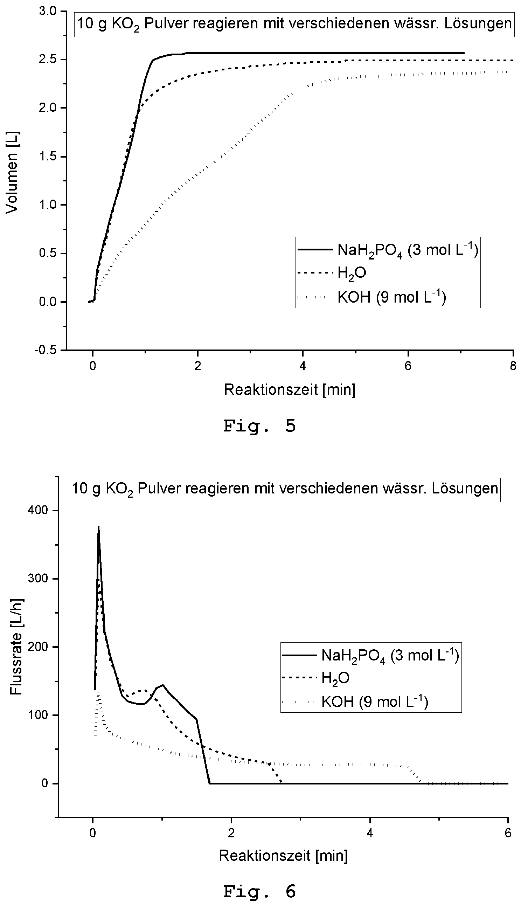

Jeweils 10 g pulverförmiges Kaliumsuperoxid wurde als Sauerstoffquelle in drei zylindrische Reaktionsgefäße mit einem Innendurchmesser von 28 mm vorgelegt. Anschließend wurde bei einer Umgebungstemperatur von Raumtemperatur die Reaktion zur Erzeugung von Sauerstoff durch Zugabe von entweder 20 mL Wasser, 20 mL einer wässrigen 9M Kaliumhydroxid-Lösung oder 20 mL einer wässrigen 3M Natriumdihydrogenphosphat-Lösung initiiert. Der pH-Wert von Wasser betrug pH 7. Der pH-Wert der wässrigen 9M Kaliumhydroxid-Lösung betrug pH 15. Der pH-Wert der wässrigen 3M Natriumdihydrogenphosphat-Lösung betrug pH 3. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Messungen wurden nach 8 Minuten beendet, da in allen Fällen eine Sauerstoffausbeute von 99 % erzielt wurde. Die Ergebnisse sind in den Figuren 5 und 6 und in der Tabelle 2 dargestellt.

**Tabelle 2:**

| Wässrige Lösung (Konzentration [mol L⁻¹]) | Reaktionstemperatur [°C] | Flussrateₘₐₓ [L/h] | O₂ Volumen [L] | O₂ Volumen [%] |
|---|---|---|---|---|
| KOH (9) | 49 | 135 | 2.5 | 99 |
| H₂O | 63 | 299 | 2.5 | 99 |
| NaH₂PO₄ (3) | 81 | 377 | 2.5 | 99 |

Daraus ist ersichtlich, dass bei allen Reaktionen eine maximale Ausbeute an Gasvolumen von 2,5 L erreicht wird. Durch Zugabe von Wasser wurde eine maximale Reaktionstemperatur von 63 °C und eine maximale Sauerstoffflussrate von 299 L/h erreicht. Durch Zugabe der wässrigen Kaliumhydroxid-Lösung wurde eine maximale Reaktionstemperatur von 49 °C und eine maximale Sauerstoffflussrate von 135 L/h erreicht. Durch Zugabe von wässriger Natriumdihydrogenphosphat-Lösung wurde eine maximale Reaktionstemperatur von 81 °C und eine maximale Sauerstoffflussrate von 377 L/h erreicht. In Abhängigkeit ob und in welcher Konzentration ein Salz in der wässrigen Lösung gelöst worden ist, hat diese einen Einfluß auf die maximale Reaktionstemperatur und auf die maximale Sauerstoffflußrate bei der Reaktion zur Erzeugung von Sauerstoff. Hierbei führt eine höhere maximale Reaktionstemperatur zu einer höheren maximalen Sauerstoffflussrate. Das durch die gemessenen Flussraten ermittelte Flusskurvenprofil verläuft durch Zugabe der wässrigen Kaliumhydroxid-Lösung deutlich plateau-förmiger. Durch Zugabe der wässrigen Kaliumhydroxid-Lösung erfolgt die Sauerstofffreisetzung kontinuierlicher und gleichmäßiger.

### 5. Ausführungsbeispiel:

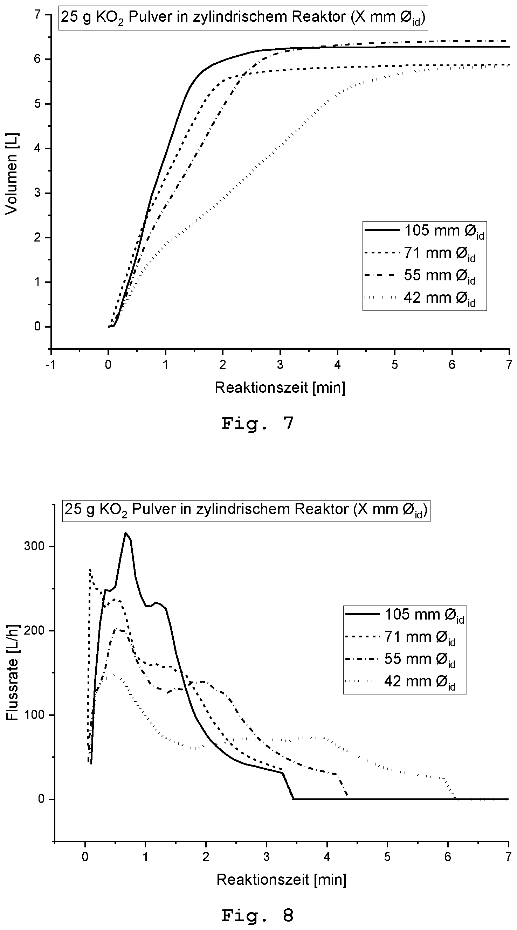

Jeweils 25 g pulverförmiges Kaliumsuperoxid wurde als Sauerstoffquelle in vier zylindrische Reaktionsgefäße mit einem Innendurchmesser von entweder 42 mm, 55 mm, 71 mm oder 105 mm vorgelegt. Anschließend wurde bei einer Umgebungstemperatur von Raumtemperatur die Reaktion zur Erzeugung von Sauerstoff durch Zugabe von jeweils 50 mL einer wässrigen 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Meßdaten wurde nach 7 Minuten beendet, da in allen Fällen eine Ausbeute von 98 % des erzielbaren Sauerstoffvolumens erreicht wurde. Die Ergebnisse sind in den Figuren 7 und 8 und in der Tabelle 3 dargestellt.

**Tabelle 3:**

| Innendurchmesser [mm] | Flussrateₘₐₓ [L/h] | O₂ Volumen [L] | O₂ Volumen [%] |
|---|---|---|---|
| 42 | 148 | 6.4 | 98 |
| 55 | 203 | 6.4 | 98 |
| 71 | 273 | 6.4 | 98 |
| 105 | 316 | 6.4 | 98 |

Daraus ist ersichtlich, dass bei allen Reaktionen eine maximale Ausbeute an Gasvolumen von 6,4 L erreicht wird. Bei einem Innendurchmesser des zylindrischen Reaktionsgefäßes von 42 mm wird eine maximale Sauerstoffflussrate von 148 L/h erreicht. Bei einem Innendurchmesser des zylindrischen Reaktionsgefäßes von 55 mm wird eine maximale Sauerstoffflussrate von 203 L/h erreicht. Bei einem Innendurchmesser des zylindrischen Reaktionsgefäßes von 71 mm wird eine maximale Sauerstoffflussrate von 273 L/h erreicht. Bei einem Innendurchmesser des zylindrischen Reaktionsgefäßes von 105 mm wird eine maximale Sauerstoffflussrate von 316 L/h erreicht. Der Innendurchmesser des zylindrischen Reaktionsgefäßes hat einen Einfluss auf die maximale Sauerstoffflussrate bei der Reaktion zur Erzeugung von Sauerstoff. Hierbei führt ein größerer Innendurchmesser des zylindrischen Reaktionsgefäßes zu einer höheren maximalen Sauerstoffflussrate. Das durch die gemessenen Flussraten ermittelte Flusskurvenprofil verläuft bei einem Innendurchmesser des zylindrischen Reaktionsgefäßes von 42 mm deutlich Plateau-förmiger. Bei einem Innendurchmesser des zylindrischen Reaktionsgefäßes von 42 mm erfolgt die Sauerstofffreisetzung kontinuierlicher und gleichmäßiger.

### 6. Ausführungsbeispiel:

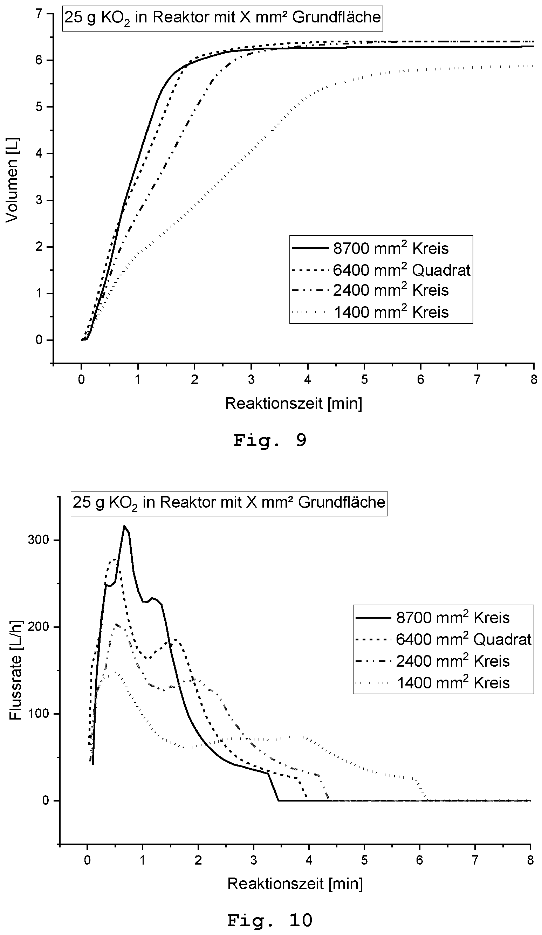

Jeweils 25 g pulverförmiges Kaliumsuperoxid wurde als Sauerstoffquelle in vier Reaktionsgefäße vorgelegt. Die Reaktionsgefäße hatten entweder eine kreisförmige Grundflächenform mit einem Innendurchmesser von 42 mm (1400 mm² Grundfläche), 71 mm (2400 mm² Grundfläche) oder 105 mm (8700 mm² Grundfläche) oder eine quadratische Grundflächenform mit einem Innendurchmesser von 80 mm (6400 mm² Grundfläche). Anschließend wurde bei einer Umgebungstemperatur von Raumtemperatur die Reaktion zur Erzeugung von Sauerstoff durch Zugabe von jeweils 50 mL einer wässrigen 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Messdaten wurde nach 8 Minuten beendet, da in allen Fällen eine Ausbeute von 98 % des erzielbaren Sauerstoffvolumens erreicht wurde. Die Ergebnisse sind in den Figuren 9 und 10 und in der Tabelle 4 dargestellt.

**Tabelle 4:**

| Grundfläche [mm²] (Form) | Flussrateₘₐₓ [L/h] | O₂ Volumen [L] | O₂ Volumen [%] |
|---|---|---|---|
| 1400 (Kreis) | 148 | 6.4 | 98 |
| 2400 (Kreis) | 203 | 6.4 | 98 |
| 6400 (Quadrat) | 277 | 6.4 | 98 |
| 8700 (Kreis) | 316 | 6.4 | 98 |

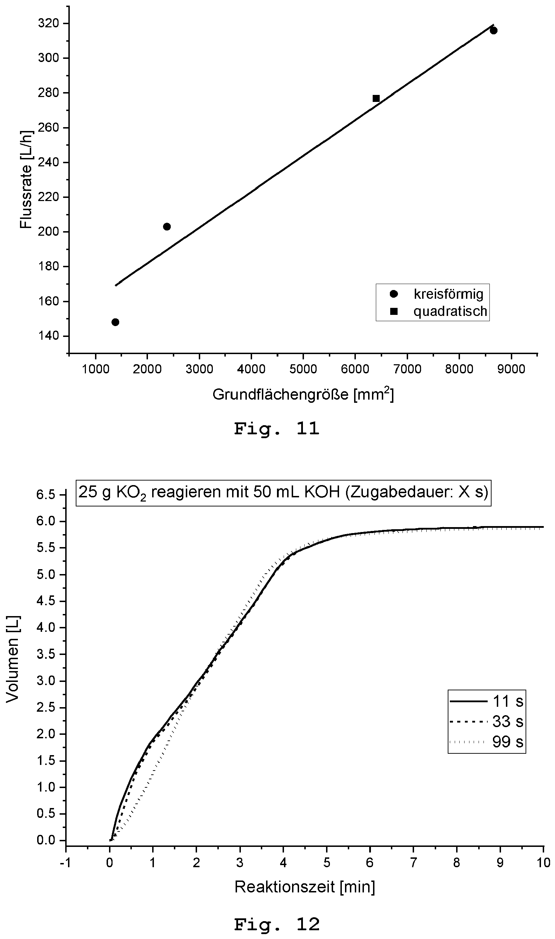

Daraus ist ersichtlich, dass bei allen Reaktionen eine maximale Ausbeute an Gasvolumen von 6,4 L erreicht wird. Bei einer kreisförmigen Grundfläche von 1400 mm² wird eine maximale Sauerstoffflussrate von 148 L/h erreicht. Bei einer kreisförmigen Grundfläche von 2400 mm² wird eine maximale Sauerstoffflussrate von 203 L/h erreicht. Bei einer quadratischen Grundfläche von 6400 mm² wird eine maximale Sauerstoffflussrate von 277 L/h erreicht. Bei einer kreisförmigen Grundfläche von 8700 mm² wird eine maximale Sauerstoffflussrate von 316 L/h erreicht. Die Grundfläche des Reaktionsgefäßes hat einen Einfluss auf die maximale Sauerstoffflussrate bei der Reaktion zur Erzeugung von Sauerstoff. Ein linearer Zusammenhang zwischen Grundfläche des Reaktionsgefäßes und maximaler Sauerstoffflussrate ist in Fig. 11 dargestellt. Daraus ist ersichtlich, dass eine größere Grundfläche des Reaktionsgefäßes zu einer höheren maximalen Sauerstoffflussrate führt. Zudem ist daraus ersichtlich, dass die Grundflächenform des Reaktionsgefäßes keinen Einfluss auf die maximale Sauerstoffflussrate hat. Das durch die gemessenen Flussraten ermittelte Flusskurvenprofil verläuft bei einer Grundfläche des Reaktionsgefäßes von 1400 mm² deutlich Plateau-förmiger. Bei einer Grundfläche des Reaktionsgefäßes von 1400 mm² erfolgt die Sauerstofffreisetzung kontinuierlicher und gleichmäßiger.

### 7. Ausführungsbeispiel:

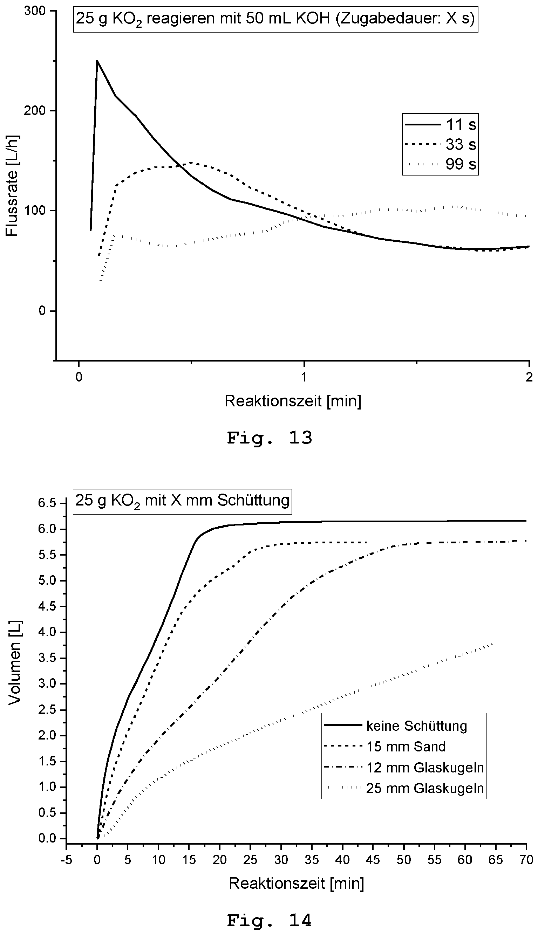

Jeweils 25 g pulverförmiges Kaliumsuperoxid wurde als Sauerstoffquelle in drei zylindrische Reaktionsgefäße mit einem Innendurchmesser von 42 mm zugegeben. Bei einer Umgebungstemperatur von Raumtemperatur wurde die Reaktion zur Erzeugung von Sauerstoff durch Zugabe von jeweils 50 mL wässriger 9M Kaliumhydroxid-Lösung initiiert. Die Zugabe der 50 mL der wässrigen Kaliumhydroxid-Lösung erfolgte dabei innerhalb einer Zugabezeit von entweder 11 Sekunden, 33 Sekunden oder 99 Sekunden. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 10 Minuten abgebrochen. Die Ergebnisse sind in den Figuren 12 und 13 dargestellt. Daraus ist ersichtlich, dass bei allen Reaktionen eine maximale Ausbeute an Gasvolumen von 5,9 L erreicht wird. Das durch die gemessenen Flussraten ermittelte Flusskurvenprofil verläuft bei einer Zugabezeit von 99 Sekunden deutlich Plateau-förmiger. Die Zugabezeit der wässrigen Kaliumhydroxid-Lösung hat einen Einfluss auf die maximale Sauerstoffflussrate bei der Reaktion zur Erzeugung von Sauerstoff. Hierbei führt eine längere Zugabezeit der wässrigen Kaliumhydroxid-Lösung zu einer niedrigeren maximalen Sauerstoffflussrate.

### 8. Ausführungsbeispiel:

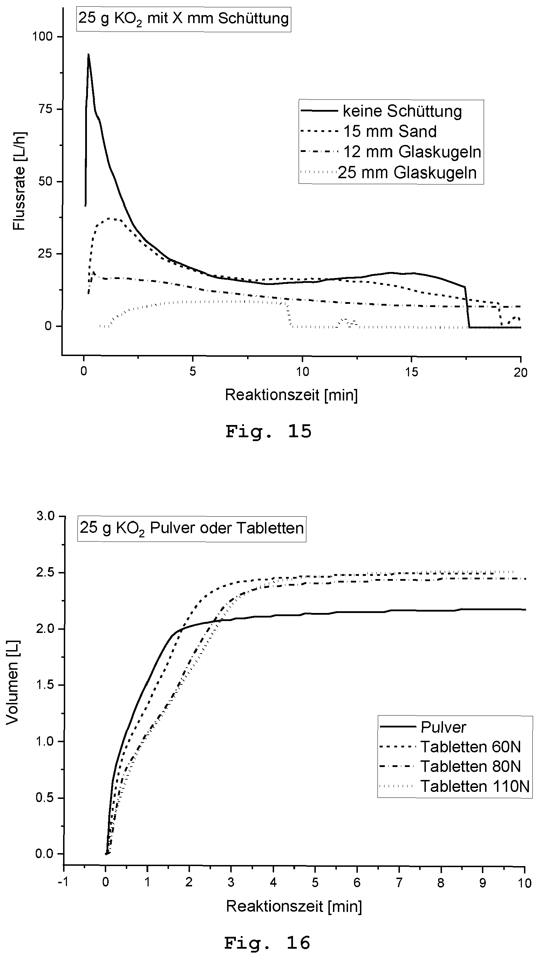

Jeweils 25 g pulverförmiges Kaliumsuperoxid wurde als Sauerstoffquelle in vier zylindrische Reaktionsgefäße mit einem Innendurchmesser von 42 mm vorgelegt. In den Reaktionsgefäßen wurde das vorgelegte Kaliumsuperoxid entweder mit einer Schüttung Seesand mit einer Schüttungshöhe von 15 mm oder mit einer Schüttung Glaskugeln mit einer Schüttungshöhe von entweder 12 mm oder 25 mm überschichtet. In einem Reaktionsgefäß wurde das vorgelegte Kaliumsuperoxid nicht mit einer Schüttung überschichtet. Anschließend wurden bei einer Umgebungstemperatur von -20 °C jeweils 50 mL einer auf eine Umgebungstemperatur von -20 °C temperierten wässrigen 9M Kaliumhydroxid-Lösung in die Reaktionsgefäße zugegeben. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 70 Minuten abgebrochen. Die Ergebnisse sind in den Figuren 14 und 15 und in der Tabelle 5 dargestellt.

**Tabelle 5:**

| | | Nach 15 min Reaktionszeit | |
|---|---|---|---|
| Schüttungsart (Höhe [mm]) | Flussrateₘₐₓ [L/h] | O₂ Volumen [L] | O₂ Volumen [%] |
| ohne | 94 | 5.49 | 84 |
| Seesand (15) | 37 | 4.58 | 70 |
| Glaskugeln (12) | 18 | 2.54 | 39 |
| Glaskugeln (25) | 8.5 | 1.50 | 23 |

Daraus ist ersichtlich, dass nach 15 Minuten Reaktionszeit bei der Reaktion ohne Schüttung eine maximale Ausbeute an Gasvolumen von 5,49 L und eine maximale Sauerstoffflussrate von 94 L/h ermöglicht wird. Bei der Reaktion mit einer Schüttung Seesand mit einer Schüttungshöhe von 15 mm wird nach 15 Minuten Reaktionszeit eine maximale Ausbeute an Gasvolumen von 4,58 L und eine maximale Sauerstoffflussrate von 37 L/h ermöglicht. Bei der Reaktion mit einer Schüttung Glaskugeln mit einer Schüttungshöhe von 12 mm wird nach 15 Minuten Reaktionszeit eine maximale Ausbeute an Gasvolumen von 2,54 L und eine maximale Sauerstoffflussrate von 18 L/h ermöglicht. Bei der Reaktion mit einer Schüttung Glaskugeln mit einer Schüttungshöhe von 25 mm wird nach 15 Minuten Reaktionszeit eine maximale Ausbeute an Gasvolumen von 1.50 L und eine maximale Sauerstoffflussrate von 8,5 L/h ermöglicht. Die Art und Höhe der Schüttung hat einen Einfluss auf die maximale Sauerstoffflussrate bei der Reaktion zur Erzeugung von Sauerstoff. Hierbei führt eine größere Schüttungshöhe zu einer niedrigeren Sauerstoffflussrate bei der Reaktion zur Erzeugung von Sauerstoff. Das durch die gemessenen Flussraten ermittelte Flusskurvenprofil verläuft bei den Reaktionen mit mittels einer Schüttung überschichtetem Kaliumsuperoxid deutlich Plateau-förmiger. Bei den Reaktionen mit mittels einer Schüttung überschichtetem Kaliumsuperoxid erfolgt die Sauerstofffreisetzung kontinuierlicher und gleichmäßiger. Dies liegt daran, dass die Schüttung eine Fixierung des Kaliumsuperoxids in dem Reaktionsgefäß ermöglicht. Somit wird ein Aufschwimmen und/oder Aufwirbeln des Kaliumsuperoxids durch Zugabe der wässrigen Kaliumhydroxid-Lösung verhindert. Auch ein Aufschäumen bei der Reaktion zur Erzeugung von Sauerstoff wird durch die Schüttung verhindert.

### 9. Ausführungsbeispiel:

Jeweils 10 g Kaliumsuperoxid wurden als Pulver oder als Tabletten mit einer Bruchfestigkeit von entweder 60 N, 80 N oder 110 N verpresst und in vier zylindrische Reaktionsgefäße mit einem Innendurchmesser von 28 mm vorgelegt.

Hierbei und im Folgenden wird unter Bruchfestigkeit die mechanische Festigkeit einer gepressten Tablette gegenüber einer diametral einwirkenden Kraft zum Zeitpunkt des Zerbrechens bezeichnet (Europäisches Arzneibuch. 8. Ausg. 2014; 2.9.8). Die Bruchfestigkeit der Tablette wird als radiale Bruch- bzw. Druckfestigkeit der Tablette bestimmt, indem die Tablette zwischen zwei Backen zermalmt wird.

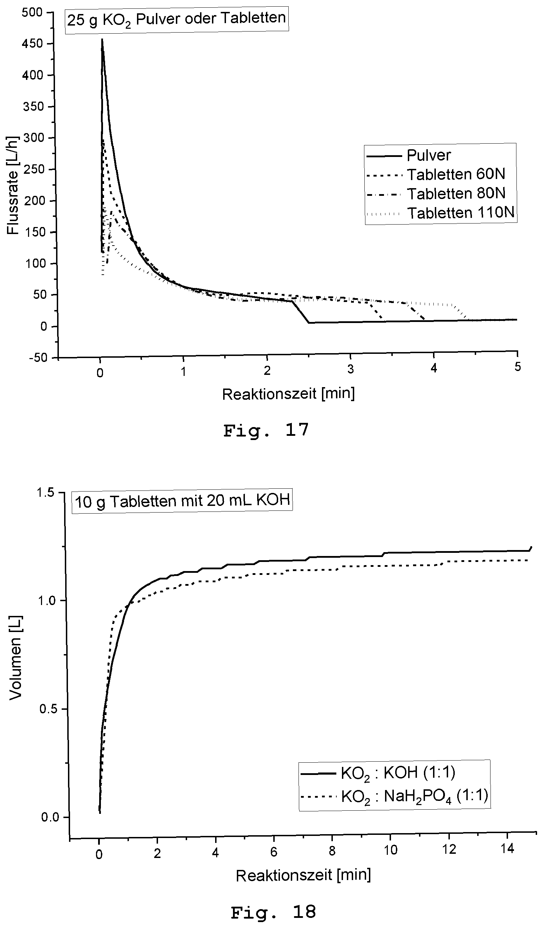

Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefä-ßen geleitet. Zusätzlich wurden die Sauerstoffflussraten und die Länge der Reaktionszeit gemessen. Das Kaliumsuperoxid-Pulver wurde während der Zugabe der wässrigen 9M Kaliumhydroxid-Lösung und während der gesamten Reaktionszeit gerührt, um ein Verkleben der Oberfläche durch Reaktionsprodukte zu vermeiden. Die Reaktionen wurden nach 10 Minuten abgebrochen. Die Ergebnisse sind in den Figuren 16 und 17 und in Tabelle 6 dargestellt.

**Tabelle 6:**

| Quelle (Bruchfestigkeit) | Flussrateₘₐₓ [L/h] | Reaktionstemperatur [°C] | O₂ Volumen [L] | O₂ Volumen [%] |
|---|---|---|---|---|
| Pulver | 456 | 46 | 2.2 | 85 |
| Tabletten (60N) | 297 | 48 | 2.5 | 96 |
| Tabletten (80N) | 182 | 48 | 2.5 | 96 |
| Tabletten (110N) | 189 | 48 | 2.5 | 96 |

Daraus ist ersichtlich, dass bei der Reaktion mit pulverförmigem Kaliumsuperoxid eine maximale Ausbeute an Gasvolumen von 2,2 L erreicht wird. Bei den Reaktionen von Kaliumsuperoxid in Tablettenform wird eine maximale Ausbeute an Gasvolumen von 2,5 L erreicht wird. Bei pulverförmigem Kaliumsuperoxid wird eine maximale Sauerstoffflussrate von 456 L/h erreicht. Bei zu Tabletten verpresstem Kaliumsuperoxid wird bei einer Bruchfestigkeit von 60 N eine maximale Sauerstoffflussrate von 297 L/h, einer Bruchfestigkeit von 80 N eine maximale Sauerstoffflussrate von 182 L/h und bei einer Bruchfestigkeit von 110 N eine maximale Sauerstoffflussrate von 189 L/h erreicht. Die Bruchfestigkeit der Tablette hat einen Einfluss auf die maximale Sauerstoffflussrate bei der Reaktion zur Erzeugung von Sauerstoff. Hierbei führt eine höhere Bruchfestigkeit der Tablette zu einer niedrigeren maximalen Sauerstoffflussrate.

### 10. Ausführungsbeispiel:

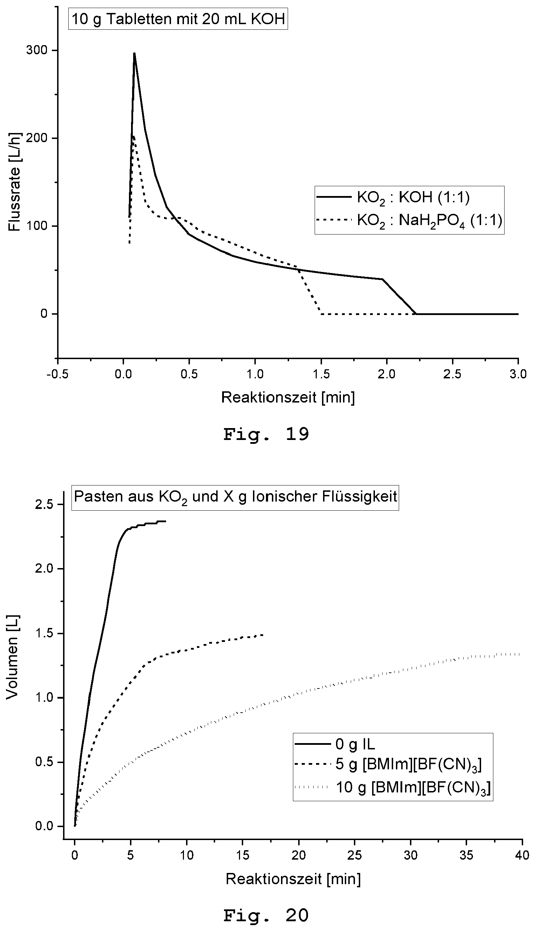

Jeweils 5 g Kaliumsuperoxid wurden entweder mit 5 g Kaliumhydroxid oder mit 5 g Natriumdihydrogenphosphat zu Tabletten mit einer Bruchfestigkeit von 60 N verpresst (Massenverhältnis jeweils 1:1). 10 g dieser Tabletten wurden jeweils in zwei zylindrische Reaktionsgefäße mit einem Innendurchmesser von 28 mm vorgelegt. Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 15 Minuten abgebrochen. Die Ergebnisse sind in den Figuren 18 und 19 und in Tabelle 7 dargestellt.

**Tabelle 7:**

| Tabletteninhalt (Massenverhältnis) | Flussrateₘₐₓ [L/h] | Reaktionstemperatur [°C] | O₂ Volumen [L] | O₂ Volumen [%] |
|---|---|---|---|---|
| KO₂, KOH (1:1) | 297 | 44 | 1.2 | 96 |
| KO₂, NaH₂PO₄ (1:1) | 205 | 55 | 1.2 | 96 |

Daraus ist ersichtlich, dass bei beiden Reaktionen eine maximale Ausbeute an Gasvolumen von 1,2 L erreicht wird. Bei Tabletten bestehend aus Kaliumsuperoxid und Kaliumhydroxid in einem Massenverhältnis von 1:1 wird eine maximale Sauerstoffflussrate von 297 L/h und eine maximale Reaktionstemperatur von 44 °C erreicht. Bei Tabletten bestehend aus Kaliumsuperoxid und Natriumdihydrogenphosphat in einem Massenverhältnis von 1:1 wird eine maximale Sauerstoffflussrate von 297 L/h und eine maximale Reaktionstemperatur von 55 °C erreicht.

### 11. Ausführungsbeispiel:

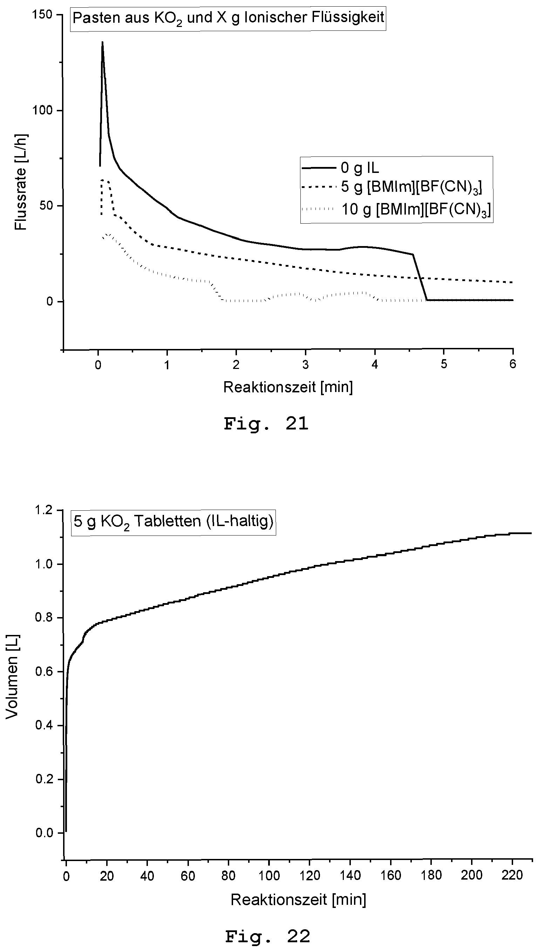

10 g pulverförmiges Kaliumsuperoxid wurde als Sauerstoffquelle in einem zylindrischen Reaktionsgefäß mit einem Innendurchmesser von 28 mm vorgelegt. In einem weiteren zylindrischen Reaktionsgefäß mit einem Innendurchmesser von 28 mm wurden 15 g einer Paste bestehend aus 10 g Kaliumsuperoxid als Sauerstoffquelle und 5 g [BMIm][BF(CN)₃] vorgelegt. In einem weiteren zylindrischen Reaktionsgefäß mit einem Innendurchmesser von 28 mm wurden 20 g einer Paste bestehend aus 10 g Kaliumsuperoxid als Sauerstoffquelle und 10 g [BMIm][BF(CN)₃] vorgelegt. Anschließend wurde bei einer Umgebungstemperatur von Raumtemperatur die Reaktion zur Erzeugung von Sauerstoff durch Zugabe von jeweils 20 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Reaktionen wurden nach 40 Minuten abgebrochen. Die Ergebnisse sind in den Figuren 20 und 21 und in Tabelle 8 dargestellt.

**Tabelle 8:**

| | | Nach 10 Minuten Reaktionszeit | | |
|---|---|---|---|---|
| **IL** | Flussrateₘₐₓ [L/h] | Reaktionstemperatur [°C] | O₂ Volumen [L] | O₂ Volumen [%] |
| Ohne | 135 | 49 | 2.37 | 95 |
| 5 g IL | 63 | 29 | 1.47 | 58 |
| 10 g IL | 36 | 26 | 0.90 | 35 |

Daraus ist ersichtlich, dass bei pulverförmigem Kaliumsuperoxid die maximale Ausbeute an Gasvolumen von 2,37 L nach 8 Minuten Reaktionszeit erreicht wird. Das in dieser Reaktion theoretisch maximal erzeugbare Gasvolumen beträgt 2,51 L. Das durch die gemessenen Flussraten ermittelte Flusskurvenprofil verläuft bei den Pasten bestehend aus Kaliumsuperoxid und [BMIm][BF(CN)₃] deutlich Plateau-förmiger. Bei den Pasten bestehend aus Kaliumsuperoxid und [BMIm][BF(CN)₃] erfolgt die Sauerstofffreisetzung kontinuierlicher und gleichmäßiger. Die Sauerstofffreisetzung erfolgt kontinuierlicher und gleichmäßiger, je höher das Gesamtgewicht der ionischen Flüssigkeit im Verhältnis zum Gesamtgewicht des Kaliumsuperoxids in der Paste ist.

### 12. Ausführungsbeispiel:

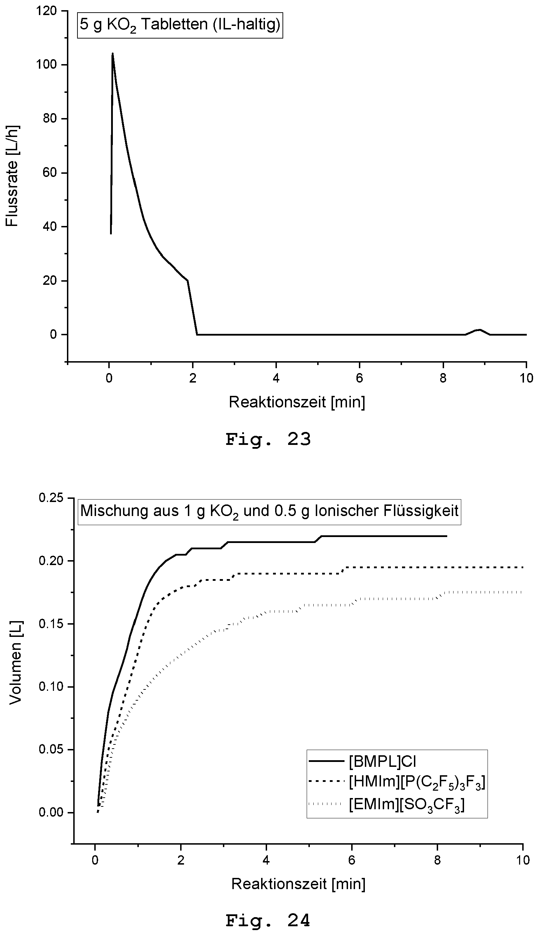

4,55 g Kaliumsuperoxid und 0,45 g [BMPL][BF(CN)₃] wurden zu Tabletten verpresst. 5 g dieser Tabletten wurden in einem zylindrischen Reaktionsgefäß mit einem Innendurchmesser von 28 mm vorgelegt. Anschließend wurde bei einer Umgebungstemperatur von Raumtemperatur die Reaktion zur Erzeugung von Sauerstoff durch Zugabe von 10 mL einer 9M Kaliumhydroxid-Lösung initiiert. Das Reaktionsgefäß wurde verschlossen und der durch die Reaktion zur Erzeugung von Sauerstoff freigesetzte Sauerstoff durch einen Trommelgaszähler zur Messung des Volumens des erzeugten Sauerstoffs aus dem Reaktionsgefäß geleitet. Zusätzlich wurde die Sauerstoffflussrate und die Länge der Reaktionszeit gemessen. Die Aufzeichnung der Messdaten wurde nach 225 Minuten beendet. Die Ergebnisse sind in den Figuren 22 und 23 und in Tabelle 9 dargestellt.

**Tabelle 9:**

| Flussrateₘₐₓ [L/h] | Reaktionstemperatur [°C] | O₂ Volumen [L] | O₂ Volumen [%] | Reaktionsdauer [min] |
|---|---|---|---|---|
| 104 | 27 | 1.11 | 94 | 219 |

Daraus ist ersichtlich, dass bei zu Tabletten verpresstem Kaliumsuperoxid und [BMPL][BF(CN)₃] eine Ausbeute an Gasvolumen von 1,11 L nach 219 Minuten Reaktionszeit erreicht wird. Das in dieser Reaktion theoretisch maximal erzeugbare Gasvolumen beträgt 1,14 L. Bei dem durch die gemessenen Flussraten ermittelten Flusskurvenprofil ist ersichtlich, dass unmittelbar nach Zugabe der wässrigen Kaliumhydroxid-Lösung eine maximalen Flussrate von 104 L pro Stunde erreicht wird. Nach Erreichen der maximalen Flussrate nimmt die Flussrate kontinuierlich ab.

### 13. Ausführungsbeispiel:

In einem offenen Reaktionsgefäß wurden 2 g pulverförmiges Kaliumsuperoxid und 4 g einer Paste bestehend aus 2 g Kaliumsuperoxid und 2 g [BMPL][BF(CN)₃] vorgelegt. Die Reaktionsgefäße wurden jeweils auf eine Umgebungstemperatur von +70 °C temperiert und für 24 Stunden bei dieser Umgebungstemperatur gehalten. Nach 24 h bei +70 °C Umgebungstemperatur wurde bei beiden Proben kein wägbarer Gewichtsverlust festgestellt.

### 14. Ausführungsbeispiel:

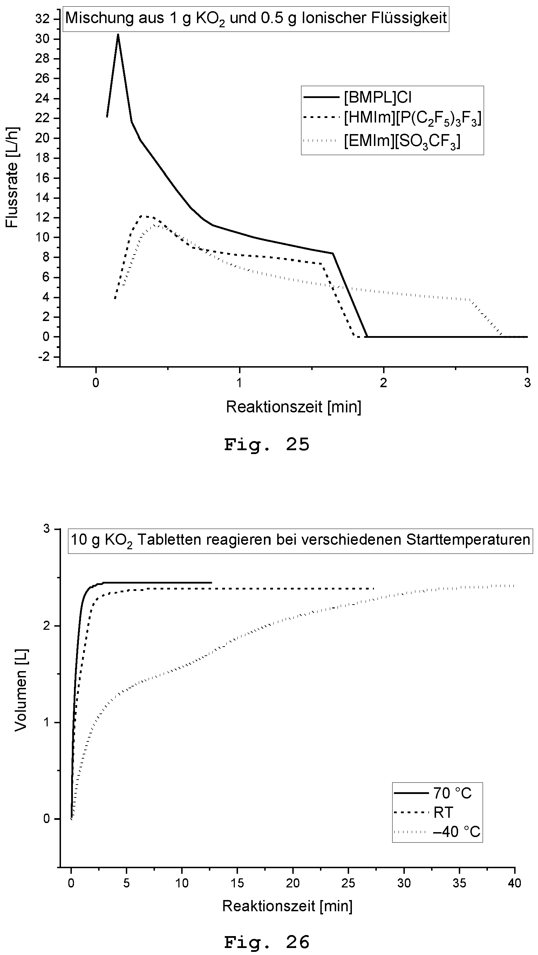

Jeweils 1 g pulverförmiges Kaliumsuperoxid wurde als Sauerstoffquelle in drei zylindrische Reaktionsgefäße mit einem Innendurchmesser von 24 mm vorgelegt. Zugegeben wurden entweder 0,5 g [BMPL]Cl, 0,5 g [HMIm][P(C₂F₅)₃F₃] oder 0,5 g [EMIm][SO₃CF₃]. Im Gegensatz zur ionischen Flüssigkeit [BMPL]CI enthalten die ionischen Flüssigkeiten [HMIm][P(C₂F₅)₃F₃] oder [EMIm][SO₃CF₃] hydrophobere Anionen. Anschließend wurde bei einer Umgebungstemperatur von Raumtemperatur die Reaktion zur Erzeugung von Sauerstoff durch Zugabe von jeweils 2 mL einer 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Messdaten wurde nach 75 Minuten beendet, da bei allen Reaktionen die maximal erzielbare Ausbeute an Sauerstoff erreicht wurde. Die Ergebnisse sind in den Figuren 24 und 25 und in Tabelle 10 dargestellt.

**Tabelle 10:**

| | | Nach 10 Minuten Reaktionszeit | |
|---|---|---|---|
| Ionische Flüssigkeit | Flussrateₘₐₓ [L/h] | O₂ Volumen [mL] | O₂ Volumen [%] |
| [BMPL]Cl | 30 | 220 | 87 |
| [HMIM][P(C₂F₅)₃F₃] | 12 | 195 | 78 |
| [EMIm][SO₃CF₃] | 11 | 175 | 70 |

Daraus ist ersichtlich, dass bei Zugabe von [BMPL]CI die maximale Ausbeute an Gasvolumen von 220 mL nach 5 Minuten Reaktionszeit erreicht wird. Durch Zugabe von [HMIm][P(C₂F₅)₃F₃] wird die maximale Ausbeute an Gasvolumen von 200 mL nach 26 Minuten Reaktionszeit erreicht. Durch Zugabe von [EMIm][SO₃CF₃] wird die maximale Ausbeute an Gasvolumen von 190 mL nach 41 Minuten Reaktionszeit erreicht. Das in dieser Reaktion theoretisch maximal erzeugbare Gasvolumen beträgt 0,25 L. Das durch die gemessenen Flussraten ermittelte Flusskurvenprofil verläuft durch Zugabe der ionischen Flüssigkeiten [HMIm][P(C₂F₅)₃F₃] und [EMIm][SO₃CF₃] mit hydrophoben Anionen deutlich Plateau-förmiger. Durch Zugabe einer ionischen Flüssigkeit mit hydrophoben Anionen erfolgt die Sauerstofffreisetzung kontinuierlicher und gleichmäßiger.

### 15. Ausführungsbeispiel:

Pulverförmiges Kaliumsuperoxid und das Schichtsilikat Glimmer wurden in einem Massenverhältnis von 10:1 innig vermengt und mittels einer Brikettierpresse zu Tabletten mit einer Masse von 200 mg, einem Durchmesser von 6 mm und einer Bruchfestigkeit von 5 kN gepresst.

Anschließend wurde bei einer Tablette bei einer Umgebungstemperatur von Raumtemperatur die Reaktion zur Erzeugung von Sauerstoff durch Zugabe von 0,4 mL einer 9M Kaliumhydroxid-Lösung initiiert. Es wurde eine vollständige Umsetzung des Kaliumsuperoxids zu Sauerstoff unter Aufschwimmen der Tablette innerhalb einer Reaktionszeit von 2 Minuten beobachtet.

### 16. Ausführungsbeispiel:

Pulverförmiges Kaliumsuperoxid und die pyrogene Kieselsäure Aerosil 200 wurden in einem Massenverhältnis von 10:1 innig vermengt und mittels einer Brikettierpresse zu Tabletten mit einer Masse von 200 mg, einem Durchmesser von 6 mm und einer Bruchfestigkeit von 5 kN gepresst.

Anschließend wurde bei einer Tablette bei einer Umgebungstemperatur von Raumtemperatur die Reaktion zur Erzeugung von Sauerstoff durch Zugabe von 0,4 mL einer 9M Kaliumhydroxid-Lösung initiiert. Es wurde eine vollständige Umsetzung des Kaliumsuperoxids zu Sauerstoff ohne Aufschwimmen der Tablette innerhalb einer Reaktionszeit von 2 Minuten beobachtet.

### 17. Ausführungsbeispiel:

Pulverförmiges Kaliumsuperoxid und das Antischaummittel Paraffin wurden in einem Massenverhältnis von 5:1 innig vermengt und mittels einer Brikettierpresse zu Tabletten mit einer Masse von 200 mg, einem Durchmesser von 6 mm und einer Bruchfestigkeit von 5 kN gepresst.

Anschließend wurde bei einer Tablette bei einer Umgebungstemperatur von Raumtemperatur die Reaktion zur Erzeugung von Sauerstoff durch Zugabe von 0,4 mL einer 9M Kaliumhydroxid-Lösung initiiert. Es wurde eine vollständige Umsetzung des Kaliumsuperoxids zu Sauerstoff ohne Aufschwimmen der Tablette innerhalb einer Reaktionszeit von 5 Minuten beobachtet.

### 18. Ausführungsbeispiel:

Pulverförmiges Kaliumsuperoxid und das Antischaummittel Silikonöl wurden in einem Massenverhältnis von 2:1 innig vermengt und mittels einer Brikettierpresse zu Tabletten mit einer Masse von 200 mg, einem Durchmesser von 6 mm und einer Bruchfestigkeit von 5 kN gepresst.

Anschließend wurde bei einer Tablette bei einer Umgebungstemperatur von Raumtemperatur die Reaktion zur Erzeugung von Sauerstoff durch Zugabe von 0,4 mL einer 9M Kaliumhydroxid-Lösung initiiert. Es wurde eine vollständige Umsetzung des Kaliumsuperoxids zu Sauerstoff ohne Aufschwimmen der Tablette innerhalb einer Reaktionszeit von 30 Minuten beobachtet.

### 19. Ausführungsbeispiel:

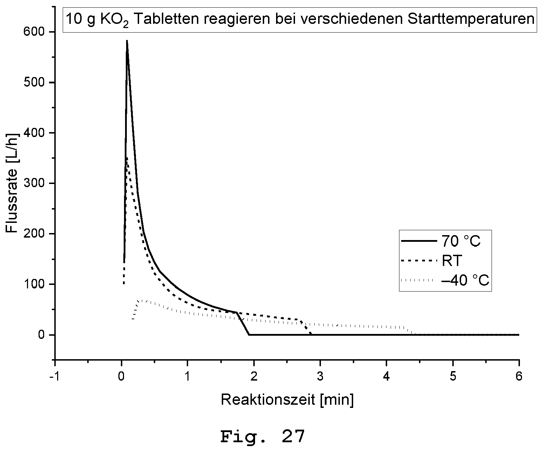

Jeweils 10 g Kaliumsuperoxid wurden als Tabletten mit einer Bruchfestigkeit von 60 N verpresst und in drei zylindrische Reaktionsgefäße mit einem Innendurchmesser von 28 mm vorgelegt. Bei einer Umgebungstemperatur von +70 °C, Raumtemperatur oder -40 °C wurde die Reaktion zur Erzeugung von Sauerstoff durch Zugabe von jeweils 20 mL einer auf die jeweilige Umgebungstemperatur temperierten wässrigen 9M Kaliumhydroxid-Lösung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefä-ßen geleitet. Zusätzlich wurden die Sauerstoffflussraten und die Länge der Reaktionszeit gemessen. Die Aufzeichnung der Messdaten wurde nach 70 Minuten beendet, da das maximal erreichbare Sauerstoffvolumen bei jeder Umgebungstemperatur erreicht wurde. Die Ergebnisse sind in den Figuren 26 und 27 und in der Tabelle 11 dargestellt.

**Tabelle 11:**

| Start-temperatur [°C] | Flussrateₘₐₓ [L/h] | Reaktions-temperatur [°C] | O₂ Volumen [L] | O₂ Volumen [%] | Reaktionsdauer [min] |
|---|---|---|---|---|---|
| -40 | 68 | 14 | 2.4 | 97 | 62 |
| RT | 351 | 48 | 2.4 | 97 | 7 |
| +70 | 582 | 80 | 2.4 | 97 | 3 |

Daraus ist ersichtlich, dass bei einer Umgebungstemperatur von +70 °C die maximale Ausbeute an Gasvolumen von 2,4 L nach 3 Minuten Reaktionszeit erreicht wird. Bei einer Umgebungstemperatur von Raumtemperatur wird die maximale Ausbeute an Gasvolumen von 2,4 L nach 7 Minuten Reaktionszeit erreicht. Bei einer Umgebungstemperatur von -40 °C wird die maximale Ausbeute an Gasvolumen von 2,4 L nach 62 Minuten Reaktionszeit erreicht. Das durch die gemessenen Flussraten ermittelte Flusskurvenprofil verläuft bei einer Umgebungstemperatur von -40 °C deutlich Plateau-förmiger. Durch eine Umgebungstemperatur von -40 °C erfolgt die Sauerstofffreisetzung kontinuierlicher und gleichmäßiger.

### 20. Ausführungsbeispiel:

Jeweils 10 g Kaliumsuperoxid wurden als Tabletten mit einer Bruchfestigkeit von 60 N verpresst und in drei zylindrische Reaktionsgefäße mit einem Innendurchmesser von 28 mm vorgelegt. Bei einer Umgebungstemperatur von +70 °C, Raumtemperatur oder - 20 °C wurde die Reaktion zur Erzeugung von Sauerstoff durch Zugabe von jeweils 20 mL einer auf die jeweilige Umgebungstemperatur temperierten 50%-igen wässrigen Ethylenglycol-Mischung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Messdaten wurde nach 70 Minuten beendet, da das maximal erreichbare Sauerstoffvolumen bei jeder Umgebungstemperatur erreicht wurde. Das Volumen des erzeugten Sauerstoffs und das durch die gemessenen Flussraten ermittelte Flusskurvenprofil sind dabei ähnlich zu den in dem Ausführungsbeispiel 19 gezeigten Ergebnissen. Auch hier erfolgt bei einer Umgebungstemperatur von - 20 °C die Sauerstofffreisetzung kontinuierlicher und gleichmäßiger.

### 21. Ausführungsbeispiel:

Jeweils 10 g Kaliumsuperoxid wurden als Tabletten mit einer Bruchfestigkeit von 60 N verpresst und in drei zylindrische Reaktionsgefäße mit einem Innendurchmesser von 28 mm vorgelegt. Bei einer Umgebungstemperatur von +70 °C, Raumtemperatur oder -20 °C wurde die Reaktion zur Erzeugung von Sauerstoff durch Zugabe von jeweils 20 mL einer auf die jeweilige Umgebungstemperatur temperierten 40%-igen wässrigen Propylenglycol-Mischung initiiert. Die Reaktionsgefäße wurden jeweils verschlossen und der durch die Reaktion zur Erzeugung von Sauerstoff freigesetzte Sauerstoff durch einen Trommelgaszähler zur Messung des Volumens des erzeugten Sauerstoffs aus den Reaktionsgefäßen geleitet. Zusätzlich wurden die Sauerstoffflussraten und die Länge der Reaktionszeit gemessen. Die Aufzeichnung der Messdaten wurde nach 70 Minuten beendet, da das maximal erreichbare Sauerstoffvolumen bei jeder Umgebungstemperatur erreicht wurde. Das Volumen des erzeugten Sauerstoffs und das durch die gemessenen Flussraten ermittelte Flusskurvenprofil sind dabei ähnlich zu den in dem Ausführungsbeispiel 19 gezeigten Ergebnissen. Auch hier erfolgt bei einer Umgebungstemperatur von - 20 °C die Sauerstofffreisetzung kontinuierlicher und gleichmäßiger.

## Patentansprüche

1. Zusammensetzung zur Erzeugung von Sauerstoff, umfassend die folgenden Bestandteile oder bestehend aus den folgenden Bestandteilen:
- Eine Sauerstoffquelle, wobei die Sauerstoffquelle Kaliumsuperoxid ist,
und
- eine Wasser enthaltende Lösung oder eine Wasser enthaltende Mischung, wobei die Wasser enthaltende Lösung eine solche Menge eines Salzes oder eine solche Menge eines Salzes zusammen mit einer solchen Menge eines Gefrierschutzmittels oder die Wasser enthaltende Mischung eine solche Menge eines Gefrierschutzmittels enthält, dass der Gefrierpunkt der Lösung oder der Mischung gegenüber dem Gefrierpunkt des Wassers um mindestens 10 °C herabgesetzt ist,
wobei das Salz der Wasser enthaltenden Lösung ein Alkalimetallhydroxid, ein Alkalimetallhydroxid-Hydrat, ein Alkalimetallchlorid, ein Alkalimetallchlorid-Hydrat, ein Hydroxid mit einem organischen Kation, ein Hydrat eines Hydroxids mit einem organischen Kation oder ein Gemisch von mindestens zwei ausgewählt aus einem Alkalimetallhydroxid, einem Alkalimetallhydroxid-Hydrat, einem Alkalimetallchlorid, einem Alkalimetallchlorid-Hydrat, einem Hydroxid mit einem organischen Kation und einem Hydrat eines Hydroxids mit einem organischen Kation ist, wobei das Gefrierschutzmittel einen Alkohol umfasst oder aus einem Alkohol besteht.

2. Zusammensetzung nach Anspruch 1, wobei das Gefrierschutzmittel einen einwertigen Alkohol, insbesondere Ethanol oder Octanol, einen zweiwertigen Alkohol, insbesondere Propylenglycol oder Ethylenglycol, einen dreiwertigen Alkohol, insbesondere Glycerol, oder ein Gemisch von mindestens zwei ausgewählt aus einem einwertigen Alkohol, insbesondere Ethanol oder Octanol, einem zweiwertigen Alkohol, insbesondere Propylenglycol oder Ethylenglycol, und einem dreiwertigen Alkohol, insbesondere Glycerol, umfasst oder jeweils daraus besteht.

3. Zusammensetzung nach Anspruch 1 oder 2, wobei das Alkalimetallhydroxid Kaliumhydroxid oder Natriumhydroxid ist, wobei das Alkalimetallhydroxid-Hydrat ein Hydrat von Kaliumhydroxid oder ein Hydrat von Natriumhydroxid ist, wobei das Alkalimetallchlorid Natriumchlorid ist, wobei das Alkalimetallchlorid-Hydrat ein Hydrat von Lithiumchlorid ist, wobei das Hydroxid mit einem organischen Kation ein Tetraalkylammonium-Hydroxid, insbesondere ein Tetrabutylammonium-Hydroxid, ist, wobei das Hydrat eines Hydroxids mit einem organischen Kation ein Hydrat eines Tetraalkylammonium-Hydroxids, insbesondere ein Hydrat von Tetrabutylammonium-Hydroxid, ist.

4. Zusammensetzung nach einem der vorhergehenden Ansprüche, wobei das Gesamtgewicht des Salzes oder das Gesamtgewicht des Salzes zusammen mit dem Gesamtgewicht des Gefrierschutzmittels in der Wasser enthaltenden Lösung im Verhältnis zum Gesamtgewicht der Wasser enthaltenden Lösung oder wobei das Gesamtgewicht des Gefrierschutzmittels in der Wasser enthaltenden Mischung im Verhältnis zum Gesamtgewicht der Wasser enthaltenden Mischung mindestens 25 Gew.-%, insbesondere mindestens 30 Gew.-%, insbesondere mindestens 35 Gew.-%, insbesondere mindestens 40 Gew.-%, beträgt.

5. Zusammensetzung nach einem der vorhergehenden Ansprüche, wobei die Sauerstoffquelle in fester Form, insbesondere als Reinstoff, vorliegt oder wobei die Sauerstoffquelle in einer ionischen Flüssigkeit in suspendierter Form vorliegt oder wobei die Sauerstoffquelle und eine ionische Flüssigkeit in verpresster Form mit der ionischen Flüssigkeit als Bindemittel vorliegen, wobei die ionische Flüssigkeit ein aus mindestens einem Kation und höchstens 100 Kationen und mindestens einem Anion und höchstens 100 Anionen bestehendes Salz in flüssigem Zustand ist.

6. Zusammensetzung nach einem der vorhergehenden Ansprüche, wobei die Zusammensetzung als weiteren Bestandteil mindestens ein Additiv umfasst, wobei das Additiv unabhängig voneinander aus Natriumdihydrogenphosphat oder Kaliumhydroxid, einem Zuschlagstoff und einem Antischaummittel ausgewählt ist.

7. Zusammensetzung nach Anspruch 6, wobei der Zuschlagstoff ein Schichtsilikat, insbesondere Glimmer, oder pyrogene Kieselsäure ist.

8. Zusammensetzung nach Anspruch 6 oder 7, wobei das Antischaummittel, Octanol, Paraffinwachs oder ein Polysiloxan umfasst oder daraus besteht.

9. Zusammensetzung nach einem der vorhergehenden Ansprüche, wobei das Gesamtgewicht der Sauerstoffquelle im Verhältnis zum Gesamtgewicht der Zusammensetzung mindestens 5 Gew.-% und höchstens 90 Gew.-%, insbesondere mindestens 20 Gew.-% und höchstens 80 Gew.-%, beträgt, wobei der verbleibende Teil der Zusammensetzung aus der Wasser enthaltenden Lösung oder der Wasser enthaltenden Mischung und optional der ionischen Flüssigkeit und/oder dem weiteren Bestandteil besteht.

10. Sauerstoffgenerator mit einem ersten und einem zweiten Kompartiment, mit einer Öffnung zur Freisetzung oder Leitung zur Ableitung von im Sauerstoffgenerator entstehendem Sauerstoff und mit sämtlichen Bestandteilen der Zusammensetzung nach Patentanspruch 1 und optional mindestens einem Bestandteil oder mindestens einem weiteren Bestandteil der Zusammensetzung nach einem der Patentansprüche 2 bis 9, wobei die Sauerstoffquelle in dem ersten Kompartiment und die Wasser enthaltende Lösung oder die Wasser enthaltende Mischung in dem zweiten Kompartiment enthalten sind, wobei optional das Additiv, der Zuschlagstoff oder das Antischaummittel nach einem der Ansprüche 6 bis 8 entweder in dem ersten Kompartiment oder in dem zweiten Kompartiment enthalten ist, wobei der Sauerstoffgenerator eine das erste Kompartiment vom zweiten Kompartiment separierende physikalische Barriere und ein Mittel zur Überwindung der physikalischen Barriere umfasst, wobei die physikalische Barriere so angeordnet ist, dass die Sauerstoffquelle und die Wasser enthaltende Lösung oder die Wasser enthaltende Mischung nach Überwindung der physikalischen Barriere miteinander in Kontakt kommen, wobei die Öffnung oder Leitung so angeordnet ist, dass dadurch entstehender Sauerstoff durch die Öffnung oder durch die Leitung austritt.

11. Sauerstoffgenerator nach Anspruch 10, wobei der Sauerstoffgenerator zusätzlich mindestens ein Verzögerungsmittel umfasst, wobei das Verzögerungsmittel so angeordnet ist, dass eine Gesamtmenge der im Sauerstoffgenerator vorhandenen Wasser enthaltenden Lösung oder eine Gesamtmenge der im Sauerstoffgenerator vorhandenen Wasser enthaltenden Mischung nach Überwindung der physikalischen Barriere erst nach und nach mit einer Gesamtmenge der im Sauerstoffgenerator vorhandenen Sauerstoffquelle in Kontakt kommt.

12. Sauerstoffgenerator nach Anspruch 11, wobei das Verzögerungsmittel eine gelochte, semipermeable Membran oder ein die Sauerstoffquelle umgebendes oder bedeckendes oder mit der Sauerstoffquelle vermischtes und gegenüber der Sauerstoffquelle und der Wasser enthaltenden Lösung oder der Wasser enthaltenden Mischung inertes Schüttgut, insbesondere Sand oder Glasperlen, ist.

13. Verfahren zur Erzeugung von Sauerstoff, wobei die Sauerstoffquelle und die Wasser enthaltende Lösung oder die Wasser enthaltende Mischung der Zusammensetzung nach einem der Ansprüche 1 bis 5 und 9 und optional die ionische Flüssigkeit, das Additiv, der Zuschlagstoff oder das Antischaummittel nach einem der Ansprüche 5 bis 8 bereitgestellt und miteinander in Kontakt gebracht werden.

14. Verfahren nach Anspruch 13, wobei das miteinander Inkontaktbringen bei einer Temperatur in einem Bereich von -70 °C bis +110 °C, insbesondere in einem Bereich von -40 °C bis +70 °C, insbesondere in einem Bereich von -40 °C bis -20 °C, erfolgt.

15. Verwendung der Sauerstoffquelle und der Wasser enthaltenden Lösung oder der Wasser enthaltenden Mischung der Zusammensetzung nach einem der Ansprüche 1 bis 5 und 9 und optional der ionischen Flüssigkeit, des Additivs, des Zuschlagstoffs oder des Antischaummittels nach einem der Ansprüche 5 bis 8 zur Erzeugung von Sauerstoff.
